# EUROPEAN PATENT APPLICATION

(11) **EP 4 572 504 A1**
(43) Date of publication of application: **18.06.2025**
(21) Application number: 22954550.4
(22) Date of filing: 11.08.2022
(51) Int. Cl.: H04W 74/08, H04W 74/00

(54) **COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong (CN)
(74) Representative: RGTH
(86) International application number: PCT/CN2022/111932
(87) International publication number: WO 2024/031587

(57) **Abstract**

The present application relates to a communication method, a terminal device and a network device. The method includes: determining, by a terminal device, based on first information, whether to perform physical random access channel (PRACH) repetitions. The first information is obtained by processing by the terminal device.

## Description

### TECHNICAL FIELD

The present application relates to the field of communications, and in particular, to a communication method, a terminal device, and a network device.

### BACKGROUND

Coverage is one of key factors that operators consider when cellular communication networks are commercialized. In some research projects, coverage of a physical uplink shared channel (PUSCH), a physical uplink control channel (PUCCH) and message 3 (Msg3) has been expanded. However, how to enhance coverage of a physical random access channel (PRACH) becomes a problem that needs to be solved.

### SUMMARY

Embodiments of the present application provide a communication method, a terminal device, and a network device.

The embodiments of the present application provide a communication method, which includes:
determining, by a terminal device, based on first information, whether to perform physical random access channel (PRACH) repetitions. The first information is obtained by processing by the terminal device.

The embodiments of the present application provide a communication method, which includes:
receiving, by a network device, physical random access channels (PRACHs). Whether to perform PRACH repetitions is determined by a terminal device based on first information, and the first information is obtained by processing by the terminal device.

The embodiments of the present application provide a terminal device, which includes:
a first processing unit used to determine whether to perform physical random access channel (PRACH) repetitions based on first information. The first information is obtained by processing the terminal device.

The embodiments of the present application provide a network device, which includes:
a second communication unit used to receive physical random access channels (PRACH). Whether to perform PRACH repetitions is determined by a terminal device based on first information, and the first information is obtained by processing by the terminal device.

The embodiments of the present application provide a terminal device, which includes: a processor and a memory. The memory is configured to store a computer program, and the processor is configured to call and run the computer program stored in the memory to cause the terminal device to perform the above communication method.

The embodiments of the present application provide a network device, which includes: a processor and a memory. The memory is configured to store computer programs, and the processor is configured to call and run the computer programs stored in the memory to cause the network device to perform the above communication method.

The embodiments of the present application provide a network device, which includes: a processor and a memory. The memory is configured to store a computer program, and the processor is configured to call and run the computer program stored in the memory to cause the network device to perform the above communication method.

The embodiments of the present application provide a chip configured to perform the above communication method.

Specifically, the chip includes: a processor, configured to call and run a computer program from a memory to cause a device on which the chip is mounted to perform the above communication method.

The embodiments of the present application provide a computer-readable storage medium configured to store a computer program. The computer program, when executed by a device, causes the device to perform the above communication method.

The embodiments of the present application provide a computer program product, including computer program instructions. The computer program instructions cause a computer to perform the above communication method.

The embodiments of the present application provide a computer program, and the computer program, when run on a computer, causes the computer to perform the above methods.

The embodiments of the present application provide a communication system, including: a terminal device, configured to perform the above communication method; and a network device, configured to perform the above communication method.

In the embodiments of the present application, the terminal device, based on a result obtained by its own processing, can determine whether to perform PRACH repetitions. In this way, a terminal device can add the function of enabling PRACH repetitions, and then perform the PRACH repetitions when needed. In a case where the PRACH repetitions are performed, coverage of the PRACH can be enhanced, thereby transmission performance of the PRACH is enhanced.

### BRIEF DESCRIPTION OF THE DRAWINGS

FIG. 1 is a schematic diagram of an application scenario, in accordance with embodiments of the present application.
FIG. 2 is a schematic diagram of a time domain configuration of a PRACH resource.
FIG. 3 is a schematic diagram of a resource configuration in a PRACH frequency domain.
FIG. 4 is a schematic diagram of a mapping relationship between SSB and RO.
FIG. 5 is a schematic flowchart of a communication method, in accordance with an embodiment of the present application.
FIG. 6 is a schematic flowchart of a communication method, in accordance with another embodiment of the present application.
FIG. 7 is a schematic diagram of a composition of DCI format 1_0, in accordance with an embodiment of the present application.
FIG. 8 to FIG. 15 are various example diagrams of composition styles of a plurality of target transmission resources, in accordance with embodiments of the present application.
FIG. 16 is a schematic block diagram of a terminal device, in accordance with an embodiment of the present application.
FIG. 17 is a schematic block diagram of a terminal device, in accordance with another embodiment of the present application.
FIG. 18 is a schematic block diagram of a network device, in accordance with an embodiment of the present application.
FIG. 19 is a schematic block diagram of a communication device, in accordance with embodiments of the present application.
FIG. 20 is a schematic block diagram of a chip, in accordance with embodiments of the present application.
FIG. 21 is a schematic block diagram of a communication system, in accordance with embodiments of the present application.

### DETAILED DESCRIPTION

Technical solutions in the embodiments of the present application will be described below with reference to the accompanying drawings in the embodiments of the present application.

The technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-generation (5G) system, or other communication systems. Generally speaking, traditional communication systems support a limited number of connections which are easy to be implemented. However, with development of communication technologies, mobile communication systems will support not only traditional communications, but also, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems. In one implementation, a communication system in the embodiments of the present application may be applied to a carrier aggregation (CA) scenario, a dual connectivity (DC) scenario, or a standalone (SA) networking scenario. In one implementation, a communication system in the embodiments of the present application may be applied to an unlicensed spectrum, where the unlicensed spectrum may also be considered as a shared spectrum; alternatively, the communication system in the embodiments of the present application may also be applied to a licensed spectrum, where the licensed spectrum may also be considered as an unshared spectrum. In the embodiments of the present application, each embodiment will be described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (ST) in WLAN, which may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next-generation communication system (e.g., an NR network), a terminal device in a future evolved public land mobile network (PLMN) network, or the like. In the embodiments of the present application, the terminal device may be deployed on land, including indoor or outdoor, handheld, wearable, or in-vehicle device; may also be deployed on water (e.g., a steamship); and may also be deployed in air (e.g., on an airplane, a balloon, or a satellite). In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like. By way of example and not limitation, in the embodiments of the present application, the terminal device may also be a wearable device. The wearable device may also be referred to as a wearable smart device, which is a general term for wearable devices developed by applying wearable technology to intelligent design for daily wear, such as glasses, gloves, a watch, clothing, or shoes. The wearable device is a portable device that is worn directly on a body, or integrated into a user's clothing or accessories. The wearable device not only is a hardware device, but also implements powerful functions through software support as well as data interaction or cloud interaction. Generalized wearable smart devices include full-featured, large-sized devices that may implement all or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device for communicating with a mobile device. The network device may be an access point (AP) in WLAN, a base station (Base Transceiver Station, BTS) in GSM or CDMA, a base station (NodeB, NB) in WCDMA, an evolutional base station (Evolutional Node B, eNB or eNodeB) in LTE, a relay station or access point, an in-vehicle device, a wearable device, a network device (gNB) in an NR network, a network device in a future evolved PLMN network, a network device in an NTN network, or the like. By way of example and not limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station set up on land, water, or the like. In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have characteristics of small coverage and low transmission power, and are suitable for providing high-speed data transmission services.

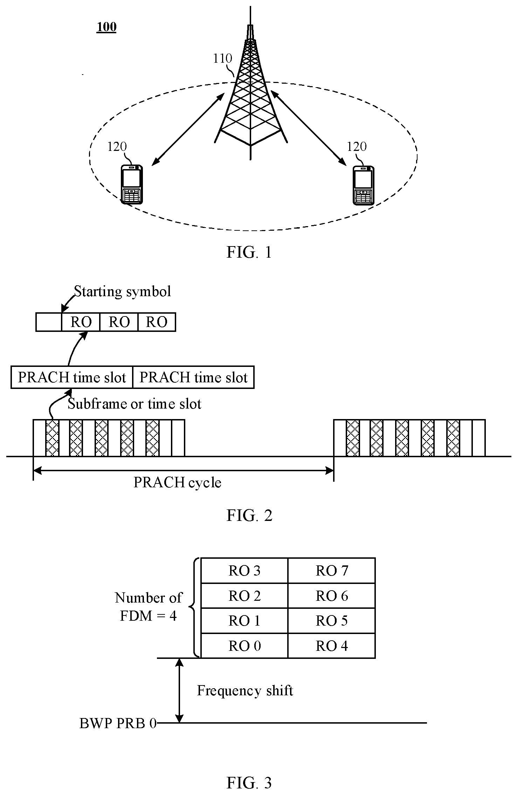

FIG. 1 exemplarily shows a communication system 100. The communication system includes a network device 110 and two terminal devices 120. In one implementation, the communication system 100 may include a plurality of network devices 110, and there may be other number of terminal devices within coverage of each network device 110, which is not limited in the embodiments of the present application. In one implementation, the communication system 100 may also include other network entities, such as a mobility management entity (MME), an access and mobility management function (AMF) entity, which is not limited in the embodiments of the present application. Furthermore, the network device may include an access network device and a core network device. That is, a wireless communication system further includes a plurality of core networks for communicating with access network devices. The access network device may be an evolutional base station (evolutional node B, shorted for eNB or e-NodeB), a macro base station, a micro base station (also called a "small base station"), a pico base station, an access point (AP), a transmission point (TP), a new generation Node B (gNodeB) or the like in a long-term evolution (LTE) system, a next generation system (mobile communication system) (next radio, NR) or an authorized auxiliary access long-term evolution (LAA-LTE) system. It should be understood that a device in a network/system having a communication function in the embodiments of the present application may be referred to as a communication device. In an example of the communication system shown in FIG. 1, the communication devices may include the network device and the terminal devices that have the communication function. The network device and the terminal devices may be specific devices in the embodiments of the present application, which will not be repeated here. The communication devices may further include other devices in the communication system, such as other network entities like a network controller, and a mobility management entity, which is not limited in the embodiments of the present application. It should be understood that terms "system" and "network" are often used interchangeably herein. The term "and/or" herein is merely used to describe an association relationship between related objects, which indicats that there may be three relationships between related objects. For example, "A and/or B" may represent: A alone, both A and B, and B alone. In addition, the character "/" herein generally indicates that related objects before and after this character are in an "or" relationship. It should be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B. The term "correspond" described in the embodiments of the present application may mean a relationship of direct or indirect correspondence between the two, or a relationship of association between the two, or a relationship of indicating and being indicated, or configuring and being configured, or the like.

To facilitate understanding of the technical solutions in the embodiments of the present application, related arts for the embodiments of the present application are described below. The following related arts, as optional solutions, may be arbitrarily combined with the technical solutions in the embodiments of the present application, which all fall within protection scope of the embodiments of the present application.

I. Channel design of a physical random access channel (PRACH) in new radio (NR): NR supports four long-sequence preamble formats (all with a length of 839). Formats 0 and 1 follow the LTE format. Format 0 is used for typical macro cell coverage, format 1 is used for ultra-large cell coverage; Format 2 uses more sequence repetitions for coverage enhancement, and Format 3 is used in high-speed mobile scenarios, such as high-speed rail. In addition, NR also supports three series of short preamble formats: A, B, and C, which are suitable for different application scenarios.

II. Configuration of a PRACH resource in NR: (1) PRACH resource period, a PRACH resource period affects the random access latency. A shorter PRACH period can shorten the random access latency. On the contrary, a longer PRACH period increases the random access latency. In addition, the PRACH resource period also affects resource overhead occupied by the PRACH. A distinctive feature of NR is the need to support beam scanning. To support random access requests from UEs distributed in various beams, the system needs to configure corresponding PRACH resources for each beam direction. Therefore, the NR standard supports PRACH periods of {10, 20, 40, 80, 160} ms. Network devices can weigh a plurality of factors such as latency and system overhead so as to set an appropriate PRACH period. (2) Time domain configuration of PRACH resources: in order to determine time domain resources of PRACH, on the basis of determining the PRACH period, it is necessary to further determine time domain distribution of PRACH resources within the PRACH period. In FR1, the PRACH resource configuration information indicates subframe numbers of one or more subframes where the PRACH resources are located; while for FR2, in order to facilitate indication of resources, time slot numbers of one or more reference time slots where the PRACH resources are located is indicated with a 60 KHz subcarrier spacing as the reference time slot. In FR1, one subframe corresponds to one 15 KHz PRACH time slot, or two 30 KHz PRACH time slots (as shown in FIG. 2, one subframe corresponds to two PRACH time slots); in FR2, one 60 KHz reference time slot corresponds to one 60 KHz PRACH time slot, or two 120 KHz PRACH time slots (as shown in FIG. 2, one time slot corresponds to two PRACH time slots). In each PRACH time slot, as shown in FIG. 2, the network can configure one or more PRACH occasions (ROs). The so-called PRACH occasion is a time-frequency resource that carries the Preamble transmission. Furthermore, since NR supports a mixed DL/UL time slot structure, the network can configure a starting symbol of a time domain resource occupied by a first PRACH occasion within the PRACH time slot. When the front symbol within the PRACH time slot needs to transmit downlink control information, resources required for the corresponding downlink control information transmission can be reserved by configuring an appropriate starting symbol. (3) Resource configuration of PRACH frequency domain: in the frequency domain, NR supports the configuration of 1, 2, 4, or 8 frequency-division multiplexing (FDM) PRACH resources to expand PRACH capacity. In a case where more than one PRACH resource is configured in the frequency domain, these PRACH resources are continuously distributed in the frequency domain. As shown in FIG. 3, the number of FDMs is equal to 4, that is, the number of PRACH resources configured in the frequency domain is 4. The network notifies an offset of a starting PRB of a first RO resource in the frequency domain relative to a starting physical resource block (PRB) of a bandwidth part (BWP) (i.e., BWP PRB 0 shown in FIG. 3).

III. Initiation of PRACH transmission: before the physical layer random access process begins: Layer 1 will receive an index set of synchronization signal and physical broadcast channel (SS/PBCH) blocks from a higher layer and provide a corresponding reference signal receiving power (RSRP) measurement result to the higher layer; the Layer 1 can receive an instruction from the higher layer to perform Type-1 random access or Type-2 random access; the Layer 1 receives the following information from the higher layer: (1) configuration of PRACH transmission parameters, such as PRACH preamble format, time domain resources and frequency domain resources for PRACH transmission, etc.; (2) PRACH preamble sequence determining parameters of the root sequence and cyclic shift, which for example may include index of the logical root sequence table, cyclic shift (Ncs), set type (unrestricted, restricted set A, or restricted set B), or the like; when PRACH transmission requested by a higher layer or PDCCH command is received, the random access process is initiated. If the random access process is initiated by the PDCCH command, the sub-carrier space (SCS) transmitted by the PRACH is the same as the SCS indicated by the higher layer. There are three ways to trigger the random access process: PDCCH command trigger: gNB tells UE through special downlink control information (DCI) format 1_0 that it needs to re-initiate the random access process; media access control (MAC) layer trigger: UE itself selects a preamble to initiate the random access process; radio resource control (RRC) layer trigger: such as initial access, reconstruction, switching, RRC_INACTIVE being switched to RRC_CONNECTED state, request for other system information (SI), RRC request during synchronization reconfiguration, or the like.

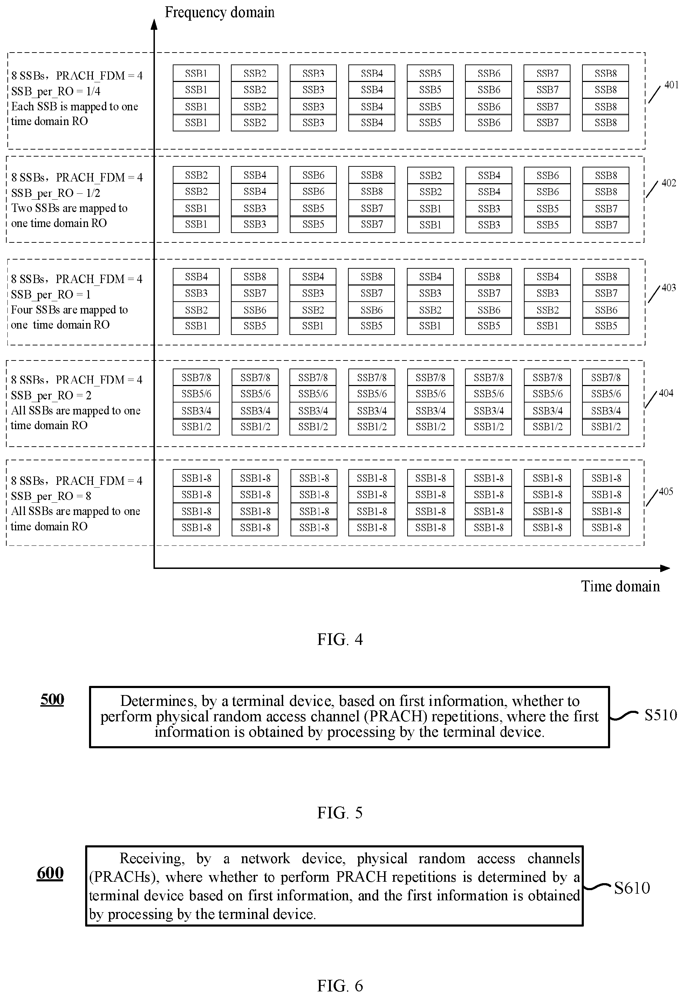

IV. Mapping of synchronization signal block (SSB) and PRACH occasion: before the UE initiates random access, the UE will measure and evaluate signal quality of the cell and signal strength of each SSB in the cell. When initiating PRACH, the UE sends a preamble on a PRACH occasion corresponding to an SSB with the strongest or stronger signal. If the network successfully receives the preamble, it will obtain the UE's downlink beam information based on the PRACH occasion where the preamble is located, and then use the beam information for subsequent communication, such as msg2, msg4, etc. There are several possible ratio relationships between SSB and PRACH occasion (i.e., RO): 1) one-to-one mapping; 2) many-to-one mapping; 3) one-to-many mapping. Considering support of diverse scenarios, these three ratio relationships are all supported in the NR standard. For example, in a scenario with fewer users, a plurality of SSBs can be supported to correspond to the same PRACH occasion to save PRACH resources, and a plurality of SSBs share the preamble in the same PRACH occasion, that is, different SSBs correspond to different subsets of preambles in the same PRACH occasion. In a scenario with more users, one SSB can be supported to correspond to a plurality of PRACH occasions to provide sufficient PRACH capacity. There are a plurality of SSBs actually transmitted and a plurality of configured PRACH occasions and corresponding preamble resources in the system. Both the network and the UE need to know to which PRACH occasions and corresponding preamble resources each SSB corresponds. In NR, a frequency domain-first design is used for mapping of SSB and RO, which is as follows: an order of increasing preamble index within each PRACH occasion; an order of increasing number of FDM PRACH occasion; an order of increasing number of time-division multiplexing PRACH occasions within one PRACH slot; and an order of increasing PRACH slots. For scenarios where the base station can only receive a single beam, a plurality of PRACH occasions to be frequency division multiplexed can be configured to correspond to the same SSB. A description is given for an example in which the number of SSBs is 8 and PRACH_FDM = 4 (frequency division multiplexed 4 ROs). FIG. 4 shows mapping relationships between SSBs and ROs for different SSB_per_RO (1/4, 1/2, 1, 2, 8). As shown in part 401 of FIG. 4, assuming that there are a total of 8 SSBs in the system, in a case shere PRACH_FDM=4, SSB_per_RO (i.e., the number of SSBs associated with one transmission resource) = 1/4, it means that one SSB is mapped to 4 ROs. Since PRACH_FDM=4, one SSB can be mapped to one time domain RO (composed of 4 ROs in the frequency domain). Since the time domain RO is frequency division multiplexed into 4 frequency domain ROs, one SSB is mapped to 4 frequency domain ROs in the same time domain. For example, in part 401 of FIG. 4, SSB 1 is mapped to 4 frequency domain ROs in a first time domain, SSB 2 is mapped to 4 frequency domain ROs in a second time domain, and so on, which will not be describedone by one. Assuming that there are a total of 8 SSBs in the system, in a case where PRACH_FDM=4 and SSB_per_RO (i.e., the number of SSBs associated with one transmission resource) = 1/2, 2 SSBs are mapped to one time domain RO. Since the time domain RO is frequency division multiplexed into 4 frequency domain ROs, one SSB is mapped to 2 frequency domain ROs in the same time domain. For example, in part 402 of FIG. 4, SSB 1 is mapped to 2 frequency domain ROs in the first time domain, SSB 2 is mapped to 2 frequency domain ROs in the first time domain, and SSB 2 is located after SSB 1, which will not be described one by one. Assuming that there are a total of 8 SSBs in the system, in a case where PRACH_FDM = 4 and SSB_per_RO (i.e., the number of SSBs associated with one transmission resource) = 1, 4 SSBs are mapped to one time domain RO. Since the time domain RO is frequency division multiplexed into 4 frequency domain ROs, one SSB is mapped to one frequency domain RO in one time domain. For example, in part 403 of FIG. 4, SSB 1 is mapped to the first frequency domain RO in the first time domain, SSB 2 is mapped to the second frequency domain RO in the first time domain, and SSB2 is located after SSB1, wheieh will not be described one by one. Assuming that there are a total of 8 SSBs in the system, in a case where PRACH_FDM = 4 and SSB_per_RO (i.e., the number of SSBs associated with one transmission resource) = 2, the 8 SSBs are mapped to one time domain RO. Since the time domain RO is frequency division multiplexed into 4 frequency domain ROs, 2 SSBs are mapped to one frequency domain RO in one time domain. For example, in part 404 of FIG. 4, SSB 1 and SSB 2 are simultaneously mapped to the first frequency domain RO in the first time domain, which will not be described one by one. Assuming that there are a total of 8 SSBs in the system, in a case where PRACH _FDM = 4 and SSB_per_RO (i.e., the number of SSBs associated with one transmission resource) = 8, the 8 SSBs are mapped to one time domain RO, and the 8 SSBs are mapped to one frequency domain RO in one time domain. For example, in part 405 of FIG. 4, SSB1 to SSB8 are simultaneously mapped to one frequency domain RO in the first time domain, which are not described one by one.

V. Selection of PRACH resource for sending preamble: PRACH mask index is used to determine a PRACH resource location for non-contention based random access process. There are four non-contention-based PRACH mask index configuration manners: 1) indicated by the parameter PRACH-ConfigDedicated (dedicated configuration) -> ra-ssb-OccasionmaskIndex in message 4; 2) indicated by the parameter BeamFailureRecoveryConfig (beam failure recovery configuration) -> ra-ssb-OccassionMakIndex in message 4; 3) indicated by SI-SchedulingInfo (scheduling information) -> SI-RequestResources (request resources) -> ra-ssb-OccassionMakIndex in system information block 1 (SIB 1); 4) indicated by PDCCH order through PRACH mask index in DCI format 1_0. Coverage is one of the key factors that operators consider when cellular communication networks is commercialized, as it directly affects service quality as well as capital expenditure and operating costs. In most scenarios of actual deployment, UL performance may be the bottleneck, while in some vertical use cases, UL traffic is heavy, such as video uploading. In Rel-17 study project 900061 "NR coverage enhancement", the NR coverage of some bottleneck channels identified in study project 860036 "NR coverage enhancement study", especially PUSCH, PUCCH and Msg3, is extended. However, due to the limited range of Rel-17 WID, not all requirements for coverage enhancement are met. PRACH transmission is very important in many processes, such as initial access and beam failure recovery. Therefore, how to improve the coverage performance of PRACH becomes a problem that needs to be solved.

FIG. 5 is a schematic flowchart of a communication method 500, in accordance with an embodiment of the present application. The method includes at least part of the following:
S510, determining, by a terminal device, based on first information, whether to perform physical random access channel (PRACH) repetitions, where the first information is obtained by processing by the terminal device.

FIG. 6 is a schematic flowchart of a communication method 600, in accordance with an embodiment of the present application. The method includes at least part of the following:
S610, receiving, by a network device, physical random access channels (PRACHs), where whether to perform the PRACH repetitions is determined by a terminal device based on first information, and the first information is obtained by processing by the terminal device.

In above embodiments, the network device may be an access network device, for example, a gNB, an eNB, a base station, etc., which is not exhaustive.

Determining, by the terminal device, based on the first information, whether to perform the PRACH repetitions may include: determining, by the terminal device, in a case where the first information meets a first condition, to perform the PRACH repetitions. In addition, it may further include: determining, by the terminal device, in a case where the first information does not meet a first condition, not to perform the PRACH repetitions.

In a possible implementation, a terminal device determines whether to perform PRACH repetitions only based on whether first information meets a first condition.

Optionally, processing by the terminal device refers to a previous PRACH transmission by a terminal device. Accordingly, the first information includes a transmission result of the previous PRACH transmission. Determining whether the first information meets the first condition may include: determining, by the terminal device, in a case where the transmission result of the previous PRACH transmission is transmission failure, that the first condition is met. Here, transmission of the PRACH may refer to transmission of a preamble on PRACH. The preamble may be a preamble in message (msg) 1 of a 4-step random access, or may be a preamble in msgA of a 2-step random access. That is to say, the embodiments of the present application can be applied to a 4-step random access process as well as a 2-step random access process. In regard to determining, by the terminal device, the transmission result of the previous PRACH transmission, the method may include one of: determining, by the terminal device, in the case of not receiving a corresponding random access response (RAR) after the previous PRACH transmission, that the transmission result of the previous PRACH transmission is transmission failure; or determining, by the terminal device, in the case of not receiving a corresponding conflict resolution message after the previous PRACH transmission, that the transmission result of the previous PRACH transmission is transmission failure. That is to say, if the terminal device does not receive any one of the RAR or conflict resolution message after the previous PRACH transmission, it can determine that the transmission result of the previous PRACH transmission is transmission failure. In some scenarios, the above conflict resolution message may also be referred to as contention resolution or a contention resolution message.

Taking processes of different random access processing as an example, in the 4-step random access process, after the terminal device perform one transmission of the PRACH (i.e., sends Msg 1 to the network device), if the terminal device does not receive an RAR replied by the network device within an RAR window, it is considered that the transmission result of the transmission of this PRACH transmission is transmission failure; if the terminal device successfully receives an RAR within the RAR window and an index of a preamble carried in the RAR message is the same as an index of the preamble in Msg 1 sent by the terminal device, the terminal device sends Msg 3 to the network device; if the terminal device correctly receives Msg 4 and determines that Msg 4 indicates that it has completed contention resolution, it determines that the transmission result of this PRACH transmission is transmission success, otherwise, it determines that the transmission result of this PRACH transmission is transmission failure. In the 2-step random access process, after the terminal device performs one transmission of the PRACH (i.e., sends Msg A to the network device), if the terminal device does not receive MsgB sent by the network device (the MsgB is used to carry RAR and/or a conflict resolution message), it determines that the transmission result of this PRACH transmission is transmission failure; if the terminal device receives MsgB sent by the network device, it determines that the transmission result of this PRACH transmission is transmission success.

Optionally, the processing by the terminal device refers to measuring a first downlink signal by the terminal device. Accordingly, the first information includes a measurement result of the first downlink signal. Determining whether the first information meets the first condition may include: determining, by the terminal device, in a case where the measurement result of the first downlink signal is less than a first threshold value, that the first condition is met.

A method for obtaining the measurement result of the first downlink signal may be: before initiating access, the terminal device measures the first downlink signal to obtain the measurement result of the first downlink signal. The measurement result of the first downlink signal can be represented by at least one of: reference signal receiving power (RSRP), reference signal receiving quality (RSRQ), and received signal strength indicator (RSSI). The number of the above first downlink signals may be one or more. The first downlink signals may be all downlink signals of the terminal device, or the first downlink signals refer to a portion of designated downlink signals of all downlink signals of the terminal device. It should also be noted that regarding measurement results of the above first downlink signals, in a case where the first downlink signals are not all downlink signals on all beams of the terminal device, the terminal device can maintain measure of all downlink signals, but only use part of the downlink signals as the first downlink signals. That is, the first information only includes measurement results of the part of the downlink signals (i.e., the first downlink signals). The measurement result of the first downlink signal is obtained by measuring the first downlink signal corresponding to the downlink beam of the terminal device; or obtained by measuring the first downlink signal corresponding to the designated downlink beam of the terminal device; or obtained by measuring the first downlink signal corresponding to the designated downlink beam of the terminal device.

Furthermore, the measurement result of the first downlink signal is obtained by measuring the downlink signal corresponding to the downlink beam of the terminal device, which can specifically mean that: the terminal device can measure the first downlink signals corresponding to all downlink beams. Accordingly, in a case where the measurement results of the first downlink signals corresponding to all downlink beams are less than the first threshold value, the terminal device determines that the first condition is met; otherwise, it determines that the first condition is not met. Here, all downlink beams may refer to all beams that the terminal device determines to use by itself. For example, in a case where the random access is contention based random access (CBRA), the terminal device determines beams used by itself (that is, all beams used by itself). In this case, the first downlink signals may be all downlink signals that can be measured by the terminal device.

Furthermore, the measurement result of the first downlink signal is obtained by measuring the downlink signal corresponding to the designated downlink beam of the terminal device, which may specifically mean that: the terminal device can measure the first downlink signal corresponding to the designated downlink beam. Accordingly, in a case where the measurement results of the first downlink signals corresponding to the designated downlink beams are all less than the first threshold value, the terminal device determines that the first condition is met; otherwise, it determines that the first condition is not met. In this case, the first downlink signals may be all downlink signals that can be measured by the terminal device in one or more designated downlink beams. The measurement result of the first downlink signal is obtained for the designated downlink signal corresponding to the designated downlink beam of the terminal device, which may specifically mean that the terminal device may measure the designated first downlink signal corresponding to the designated downlink beam. Accordingly, in a case where the measurement result of the designated first downlink signal corresponding to the designated downlink beam is less than the first threshold value, the terminal device determines that the first condition is met; otherwise, it determines that the first condition is not met. In this case, the first downlink signal may be a designated downlink signal of the terminal device on each designated downlink beam in one or more designated downlink beams. The designated downlink beam of the above terminal device may be indicated by the network device. For example, in a case where the random access is contention free random access (CFRA), the network device will indicate the beam to the terminal device. In this embodiment, the beam indicated by the network device to the terminal device is called the designated downlink beam of the terminal device. The designated downlink signal corresponding to the above designated downlink beam may also be indicated by the network device. For example, in a case where the random access is CFRA, the network device may indicate the measurement signal corresponding to the beam to the terminal device on the basis of indicating the beam to the terminal device. In this embodiment, the measurement signal corresponding to the beam indicated by the network device to the terminal device is called the designated downlink signal corresponding to the designated downlink beam.

In this embodiment, the downlink signal is specifically a downlink reference signal, which may include at least one of: synchronization signal block (SSB) and channel state information-reference signal (CSI-RS). Furthermore, in this embodiment, in addition to at least one of the above two types, the downlink signal may include at least one of: demodulation reference signal (DMRS), phase-tracking reference signal (PT-RS), and the like. Types of all possible downlink signals are not enumerated here.

The first threshold value may be preset, determined by the terminal device, or configured by the network device.

The first threshold value may be different from any threshold value specified in a relevant protocol. That is, the first threshold value is a threshold value that is specifically used to determine whether to perform the PRACH repetitions. The first threshold value can also be called any one of: a dedicated PRACH repetition threshold value, a dedicated PRACH repetition RSRP threshold value, a dedicated msg1 repetition RSRP threshold value, an msg1 RSRP threshold value (rsrp-ThresholdMsg1), a preamble RSRP threshold value (rsrp-ThresholdPreamble), a PRACH RSRP threshold value (rsrp-ThresholdPRACH), a repetition RSRP threshold value (rsrp-ThresholdRepetition), etc.; and all possible names are not enumerated here. In a case where the first threshold value is configured by the network device, the processing of the network device may further include: configuring, by the network device, the first threshold value for the terminal device. The terminal device uses the first threshold value to judge a detection result of the first downlink signal to determine whether to perform the PRACH repetitions. The first threshold value may be carried by one of: feature combination preambles (FeatureCombinationPreambles); random access channel (RACH) common configuration parameter (RACH-ConfigCommon); message (msg) A common configuration parameter (MsgA-ConfigCommon); beam failure recovery configuration (BeamFailureRecoveryConfig); msg A configuration parameter in the RACH common configuration parameter (RACH-ConfigCommonTwoStepRA).

In a case where the first threshold value is determined by the terminal device, the first threshold value is determined based on a second threshold value. The second threshold value is configured by the network device. That is, the processing of the network device may further include: configuring, by the network device, a second threshold value for the terminal device. The terminal device uses the second threshold value to determine the first threshold value. Here, the second threshold value may refer to a threshold value specified in a related protocol. For example, the second threshold value may be any one of: rsrp-ThresholdSSB, which is a RSRP threshold value for selecting synchronization signal block (SSB) for 4-step random access; rsrp-ThresholdCSI-RS, which is an RSRP threshold value for selecting CSI-RS for 4-step random access; msgA-RSRP-ThresholdSSB, which is an RSRP threshold value for selecting SSB for 2-step random access; rsrp-ThresholdSSB-SUL, which is a RSRP threshold value for selecting in normal uplink (NUL) carriers and supplementary uplink (SUL) carriers; msgA-RSRP-Threshold, which is a RSRP threshold selected for 2-step random access or 4-step random access in a case where both 2-step random access and 4-step random access are configured in the random access resource in the UL bankwidth part (BWP); rsrp-ThresholdMsg3, which is a RSRP threshold value for determining Msg3 repetition.

Optionally, in a case where the first threshold value is determined by the terminal device, the first threshold value may directly be the second threshold value. That is, the terminal device can directly reuse a threshold value specified in a relevant protocol (i.e., the above second threshold value).

Optionally, in a case where the first threshold is determined by the terminal device, the first threshold may be calculated based on the second threshold.

Exemplarily, the above alculation may be an alculation for the second threshold value based on a threshold adjustment coefficient and/or a threshold adjustment offset value. For example, the first threshold value may be equal to the threshold adjustment coefficient multiplied by the second threshold value; or, the first threshold value may be equal to the threshold adjustment offset value added to or subtracted from the second threshold value; or, the first threshold value may be equal to a result obtained by adding or subtracting the threshold adjustment offset value from the second threshold value, multiplied by the threshold adjustment coefficient; or, the first threshold value may be equal to the threshold adjustment offset value added to or subtracted from a result obtained by multiplying the second threshold value by the threshold adjustment coefficient. The threshold adjustment coefficient may be a positive number greater than or equal to 1, or a positive number less than 1; and the threshold adjustment offset value may be greater than or equal to 0, or less than 0.

The threshold adjustment coefficient and/or threshold adjustment offset value may be preset or configured by the network device. If the threshold adjustment coefficient and/or the threshold adjustment offset value is preset, it may mean that the threshold adjustment coefficient and/or the threshold adjustment offset value are agreed upon by a protocol and are pre-stored in the terminal device. In a case where the threshold adjustment coefficient and/or threshold adjustment offset value are configured by the network device, they may be carried by one of: feature combination preambles (FeatureCombinationPreambles); random access channel (RACH) common configuration parameter (RACH-ConfigCommon); message (msg) A common configuration parameter (MsgA-ConfigCommon); beam failure recovery configuration (BeamFailureRecoveryConfig); msg A configuration parameter in the RACH common configuration parameter (RACH-ConfigCommonTwoStepRA). Alternatively, in a case where the threshold adjustment coefficient and/or threshold adjustment offset value are configured by the network device, they can be carried by other messages or signaling, such as any one of system information, DCI, RRC messages, or MAC CE, which are not exhaustive here.

Optionally, if the first information only includes the measurement results of the first downlink signals, the terminal device measures the first downlink signals before initiating random access (i.e., before the initial PRACH transmission) to obtain the measurement results; and compares the measurement results of the first downlink signals with the first threshold value. If the measurement results of the first downlink signals are all less than the first threshold value, it is determined that the first condition is met, and it is determined to performe the the PRACH repetitions. If there are measurement results of one or more first downlink signals that are no less than the first threshold value, it is determined not to perform the PRACH repetitions. In this case, if it is determined to perform the PRACH repetitions, it means that when a first transmission of the PRACH is performed, a repetition method is adopted. In a case where the first information only includes the transmission result of the previous PRACH transmission, after the terminal device has performed a certain transmission of the PRACH, if it is determined that the transmission result of the previous PRACH transmission is transmission failure, it is determined that the first condition is met, and it can be determined that the PRACH repetitions are performed on the next retransmission of the PRACH; otherwise, the PRACH repetitions is not performed. In this case, the initial PRACH transmission of the terminal device may be performed without repetitions. If the first information includes the transmission result of the previous PRACH transmission and the measurement result of the first downlink signal, the terminal device measures the first downlink signals before initiating random access (i.e., before the initial PRACH transmission) to obtain the measurement results; and compares the measurement results of the first downlink signals with the first threshold value. If the measurement results of the first downlink signals are all less than the first threshold value, it is determined that the first condition is met, and it is determined to perform the PRACH repetitions. In this case, it can be determined that the PRACH repetitions has been initiated, and the terminal device may no longer use the transmission result of the previous PRACH transmission for judgment, but instead maintain the PRACH repetitions if retransmission of the PRACH is performed. If the first information includes the transmission result of the previous PRACH transmission and the measurement result of the first downlink signal, and the terminal device determines that the measurement results of one or more first downlink signals is no less than the first threshold value, it is determined that the PRACH repetitions will not be performed on the initial transmission of the PRACH. Furthermore, after the initial transmission of the PRACH, if the terminal device determines that the transmission result of the initial transmission of the PRACH is transmission failure, it determines that the first condition is met, and it can determines that the PRACH repetitions will be performed starting from the next retransmission of the PRACH; otherwise, the PRACH repetitions is not performed.

With the above implementations, as long as the terminal device determines that the first condition is met based on the first information, the terminal device determines to perform the PRACH repetitions.

In some possible implementations, the terminal device determines whether to perform the PRACH repetitions based on whether the first information meets the first condition, and can further determine whether to perform the PRACH repetitions based on second information sent by the network device.

The processing of the network device may further include: sendind, by the network device, second information. The terminal device uses the second information to determine whether to perform the PRACH repetitions. Accordingly, the processing of the terminal device further includes: receiving, by the terminal device, the second information. The terminal device uses the second information to determine whether to perform the PRACH repetitions. The terminal device uses the above second information to determine whether to perform the PRACH repetitions. The second information can be called PRACH repetition indicator information, or PRACH repetition indicator domain. It should be understood that the second information can also be called other names in actual use, such as PRACH repeatition flag, PRACH repeatition enabled information, msg1 repeatition indicator information, msg1 repeatition flag, msg1 repetition enabled information, etc., and all possible names are not enumerated here.

In one example, the network device may explicitly indicate the terminal device whether to perform the PRACH repetitions through the second information.

Determining, by the terminal device, in a case where the first information meets the first condition, to perform the PRACH repetitions, includes: determining, by the terminal device, to perform the PRACH repetitions in a case where the first information meets the first condition, the second information includes first indication information, and the first indication information is used to indicate initiation of the PRACH repetitions. The second information includes the first indication information, where a value of the first indication information is used to indicate initiation of the PRACH repetitions in the case of being a first value; or a transmission type of PRACH included in the first indication information is used to indicate initiation of the PRACH repetitions in the case of being a repetition type. That is, the first indication information in the second information may carry an enabling switch, or carry the transmission type of the PRACH.

A value of the first indication information may represent an enabling switch, that is, it may be used to indicate whether the terminal device initiates the PRACH repetitions. Specifically, in a case where the value of the first indication information is the first value, it is used to indicate initiation of enabling, i.e., initiation of the PRACH repetitions; and/or, in a case where the the value of the first indication information is a second value, it is used to indicate turning off the enabling, that is, indicate that the terminal device does not initiate the PRACH repetitions. The first value is different from the second value, and the first value and the second value may be pre-configured. For example, the first value may be 0, and the second value may be 1; or, the first value may be 1, and the second value may be 0; or, other first values or other second values may be set, and as long as the first value is different from the second value, they are all within the protection scope of this embodiment. Correspondingly, the processing of the terminal device may specifically include: determining, by the terminal device, to perform the PRACH repetitions in a case where the first information meets the first condition, the second information includes the first indication information, and the value of the first indication information is the first value; and/or, determining, by the terminal device, not to perform the PRACH repetitions in a case where the first information meets the first condition, the second information includes the first indication information, and the value of the first indication information is the second value.

Alternatively, the first indication information includes a transmission type of the PRACH. The transmission type of the PRACH included in the first indication information is used to indicate initiation of the PRACH repetitions in the case of being a repetition type. The transmission type of the PRACH included in the first indication information is used to indicate no initiation of the PRACH repetitions in the case of being no repetition type. The repetition type can also be called the repeated transmission of the PRACH, or the repetition type of the PRACH, or repeated transmission of msg1, or a repetition type of msg1, etc. The non-repetition type can also be called traditional transmission type, or traditional type, or no repetition of the PRACH, or a no repetition type of the PRACH, or no repetition of msg1, or a no repetition type of msg1, etc., and all possible names are not enumerated here. Correspondingly, the processing of the terminal device may specifically include: determining, by the terminal device, to perform the PRACH repetitions in a case where the first information meets the first condition, the second information includes the first indication information, and the transmission type of PRACH included in the first indication information is the repetition type; and/or, determining, by the terminal device, not to perform the PRACH repetitions in a case where the first information meets the first condition, the second information includes the first indication information, and the transmission type of PRACH included in the first indication information is a no repetition type; and/or, determining, by the terminal device, not to perform the PRACH repetitions in a case where the first information does not meet the first condition.

In one example, the network device may implicitly indicate the terminal device whether to perform the PRACH repetitions through the second information.

Optionally, the second information does not carry the first indication information, but may carry other relevant configuration information of repetitions. The other relevant configuration information of repetitions may be the first threshold value. Correspondingly, determining, by the terminal device, in a case where the first information meets the first condition, to perform the PRACH repetitions, includes: determining, by the terminal device, in a case where the second information includes the first threshold value and the first information meets the first condition, to perform the PRACH repetitions. The first threshold value is a threshold value related to the measurement result of the first downlink signal. In this example, the first threshold value may be different from any threshold value specified in the relevant protocol, that is, the first threshold value is a threshold value that is specifically used to determine whether to perform the PRACH repetitions. It should be understood that, in this example, if the second information carries the first threshold value, the network device can specifically use the first threshold value to performe judgment of the PRACH repetitions.

The second information includes the first threshold value, which may mean that the second information includes a name of the first threshold value and a value of the first threshold value. For example, the second information may include a first threshold value named "dedicated msg1 repetition RSRP threshold value" and a value of a1. Alternatively, the second information includes an information domain of the first threshold value, and the information domain of the first threshold value is used to carry the value of the first threshold value. For example, the second information may include one or more information domains, and content carried by each information domain is pre-defined. Assuming that the second information defines information domain 1 for carrying the "dedicated msg1 repetition RSRP threshold value". Accordingly, the terminal device can determine information domain 1 of the "dedicated msg1 repetition RSRP threshold value" according to the definition of each information domain of the second information, and then use the content carried in the information domain 1 as the value of the "dedicated msg1 repetition RSRP threshold value".

Optionally, the second information does not carry the first indication information, but may carry other relevant configuration information of repetitions. The second information is used to indicate the value of the first parameter, and the terminal device uses the value of the first parameter to determine the number of the PRACH repetitions. Correspondingly, determining, by the terminal device, in a case where the first information meets the first condition, to perform the PRACH repetitions, includes: determining, by the terminal device, in a case where the first information meets the first condition and a value of the first parameter indicated by the second information is a valid value, to perform the PRACH repetitions. The value of the first parameter is used to determine the number of the PRACH repetitions. Here, the value of the first parameter being the valid value may mean that the value of the first parameter is within a valid value range. For example, the valid value range may be an integer greater than 0, an integer greater than 1, or the like. All possible situations are not enumerated here. The second information is used to indicate the value of the first parameter. For example, the first information may include the name of the first parameter and the value of the first parameter, such as the first parameter b and the value b1. Alternatively, the second information includes an information domain of the first parameter, and the information domain of the first parameter is used to carry the value of the first parameter. For example, the second information may include one or more information domains, and the content carried by each information domain is pre-defined. Assuming that the second information defines information domain 2 for carrying the first parameter b. Accordingly, the terminal device can determine the information domain 2 corresponding to the first parameter b based on the definition of each information domain of the second information, and then use content carried in the information domain 2 as the value b1 of the first parameter b. The first parameter may be referred to as a number of repetitions of dedicated PRACH (RepetitionNumberofPRACH), or the first parameter may also be referred to as a number of repetitions of dedicated preamble (RepetitionNumberofPreamble).

Optionally, the second information may not carry the first indication information, but may carry the first threshold value and the value of the first parameter. Correspondingly, determining, by the terminal device, in a case where the first information meets the first condition, to perform the PRACH repetitions, includes: determining, by the terminal device, to perform the PRACH repetitions in a case where the first information meets the first condition, the second information includes the first threshold value, and the value of the first parameter in the second information is a valid value. Here, a manner in which the second information carries the first threshold value and the value of the first parameter is the same as that in the above embodiment and will not be described repeatedly.

In one example, the network device may indicate the terminal device whether to perform the PRACH repetitions through the second information, and also carry other relevant configuration information of the repetitions through the second information.

The second information sent by the network device may include the first indication information. In addition, the second information may further include the value of the first threshold value and/or the value of the first parameter. At this time, determining, by the terminal device, in a case where the first information meets the first condition, to perform the PRACH repetitions, includes: determining, by the terminal device, to perform the PRACH repetitions in a case where the first information meets the first condition, the first indication information in the second information indicates initiation of the PRACH repetitions, and the value of the first parameter in the second information is the valid value; or, determining, by the terminal device, to perform the PRACH repetitions in a case where the first information meets the first condition, the first indication information in the second information indicates initiation of the PRACH repetitions, and the second information includes the first threshold value; determining, by the terminal device, to perform the PRACH repetitions in a case where the first information meets the first condition, the first indication information in the second information indicates initiation of the PRACH repetitions, the value of the first parameter in the second information is the valid value, and the second information includes the first threshold value.

In some possible implementations, the second information may be carried by any one of a variety of information or signaling. Illustratively, the second information may be carried by any one of DCI, RRC signaling, MAC CE, a system information, etc.

In a case where the second information is carried by DCI, the DCI may be a first DCI, and a format of the first DCI is DCI format 1_0. In this implementation, the DCI format 1_0 is carried by a physical downlink control channel (PDCCH). The second information may specifically be carried by the first information domain of the first DCI, namely, DCI format 1_0. The first information domain may be a new information domain, and specifically may be a new information domain obtained by defining one or more bits in the reserved bits.

In one example, in a case where DCI format 1_0 is used to carry the second information, the DCI format 1_0 needs to meet at least one of the following three conditions: using radio network temporary identifier (RNTI) for scrambling; the "frequency domain resource assignment" field is all "1"; and the random access preamble index field is not all "0". RNTI can be one of: cell- RNTI (C-RNTI), temporary cell RNTI (TC-RNTI), configured scheduling RNTI (CS-RNTI), modulation coding scheme cell RNTI (MCS-C-RNTI). In a preferred example, in a case where DCI format 1_0 is used to carry the second information, the DCI format 1_0 needs to meet all of the above three conditions. In an example where the downlink signal is SSB, the reason why DCI format 1_0 needs to meet the above three conditions is explained. If DCI format 1_0 uses cell-radio network temporary identifier (C-RNTI) for scrambling, and the "frequency domain resource assignment" field is all "1", then DCI format 1_0 is used for the random access process initiated by the PDCCH command. At this time, using the DCI format 1_0 to carry the second information can enable the terminal device to initiate a random access process when receiving the second information, and directly determine whether to performe the PRACH repetitions during the random access process. In addition, in a case where the random access preamble index field is not all "0", the PRACH mask index field is used to indicate the RO associated with the SS/PBCH (i.e., SSB), and the SS/PBCH index field is used to determine the SSB. The SSB used by the terminal device and the RO associated with the SSB enable the terminal device to determine transmission resources to be used for this PRACH transmission or the repetitions.

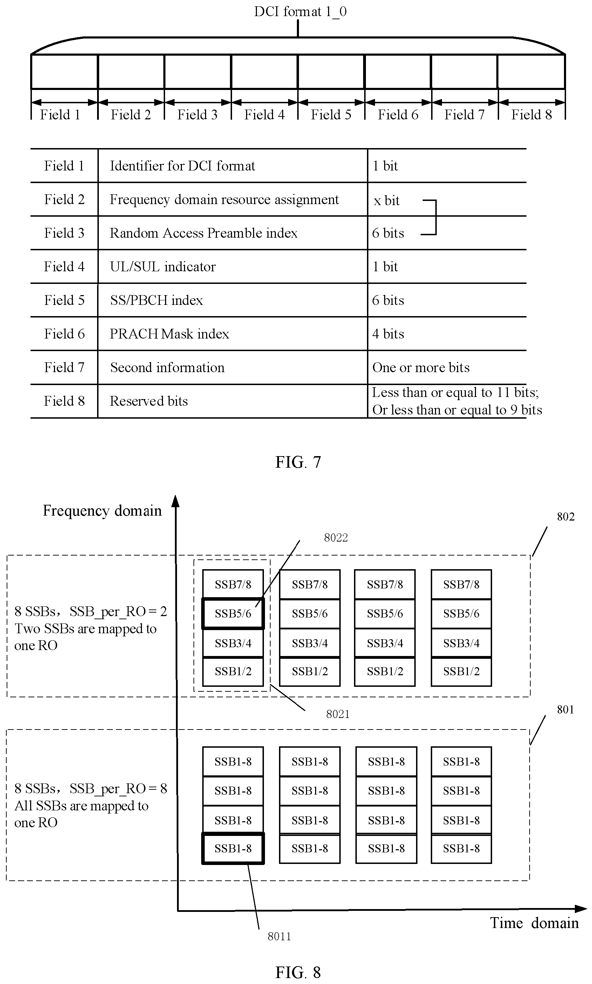

The specific composition of DCI format 1_0 carrying the second information can be shown in FIG. 7, which includes: field 1, identifier for DCI format, 1 bit, used to indicate the DCI format; field 2, frequency domain resource assignment, used to indicate the frequency domain resource, which occupies x bits (x can be determined according to the actual situation, and can be specifically calculated based on the formula specified in the protocol,which is not limited here); field 3, random access preamble index, 6 bits, used to explicitly indicate ra-preamble index; field 4, supplementary uplink (UL/SUL) indicator, 1 bit, if "random access preamble index" is not all 0 and the UE configures SUL in ServingCellConfig, this field indicating which UL carrier is used for PRACH transmission, otherwise, this field being reserved; field 5, SS/PBCH index, 6 bits, if the "random access preamble index" is not all 0, this field indicating the SS/PBCH that is used to determine the RACH occasion for PRACH transmission, otherwise, this field being reserved; field 6, PRACH mask index, 4 bits, if the "random access preamble index" is not all 0, this field indicating the RACH occasion associated with the SS/PBCH (indicated by the 6-bit SS/PBCH index), otherwise, this field being reserved; field 7, second information, one or more bits; field 8, reserved bits. The protocol specifies that for operation in a cell with shared spectrum channel access in FR1, or in a case where the DCI format is monitored in the common search space in FR2-2, the reserved bits are 12 bits, otherwise, the reserved bits are 10 bits.

In this example, the second information occupies one or more bits of the reserved bits, so the number of the reserved bits may be less than or equal to 11 bits, or the number of the reserved bits may be less than or equal to 9 bits. In addition, FIG. 7 also illustrates an arrangement order of the above field 1 to field 8 in the DCI format 1_0 carrying the second information. FIG. 7 is only an exemplary illustration, and in actual processing, the above field 7 may be before field 8, may be within field 8, or may be after field 8, all of which are within the protection scope of this embodiment, which are not exhaustive. Alternatively, the second information may be carried by the redefined information domain in the DCI format 1_0. For example, the first parameter in the second information may be carried by the redefined PRACH mask index field, that is, the PRACH mask index is redefined to carry the first parameter.

In some implementations, the second information is carried by a DCI, the DCI may be a second DCI. A format of the second DCI is other DCI format in adition to DCI format 1_0. The format of the second DCI may be: other DCI format in adition to DCI format 1_0 in the DCI formats specified by the protocol. For example, the format of the second DCI is any one of: DCI format 0_0, DCI format 0_1, DCI format 1_1, DCI format 2_1, DCI format 2_2, DCI format 2_3, or the like. In this case, the second DCI can also be carried by the PDCCH, but a function of the second DCI is not used to indicate the terminal device to initiate a random access process, and this embodiment does not limit the specific function of the second DCI. The second information may be carried by a designated information domain of the second DCI, and the designated information domain may occupy one or more bits of the reserved bits of the second DCI. In another example, the format of the second DCI may be a newly defined DCI format. The newly defined DCI format is different from the DCI format specified in the above protocol. In this case, the second DCI may be dedicated to indicate whether the terminal device performs the PRACH repetitions. The second information may be carried by a designated information domain of the second DCI, and the number of bits occupied by the second information may be one or more.

In some implementations, the second information is carried by RRC signaling. The RRC signaling may be RRC signaling in any processing flow, for example, it may be RRC connection establishment signaling, RRC connection reconfiguration completion signaling, etc., and all possible situations are not exhaustive here.

Through the above embodiments, the terminal device may determine whether to perform the PRACH repetitions using only the first information; or the terminal device may determine whether to perform the PRACH repetitions based on both the second information configured by the network device and the first information. Furthermore, the processing of the terminal device may further include: performing, by the terminal device, in the case of determining to perform the PRACH repetitions, the PRACH repetitions on a plurality of target transmission resources. The number of the plurality of target transmission resources is the same as the number of the PRACH repetitions, and each target transmission resource of the plurality of target transmission resources is used to perform one transmission of the PRACH. Correspondingly, the processing of the network device may further include: receiving, by the network device, on the plurality of target transmission resources, the repetitive PRACHs. The number of the plurality of target transmission resources is the same as the number of the PRACH repetitions, and each target transmission resource of the plurality of target transmission resources is used to receive one PRACH.

In addition, in a case where the terminal device determines not to perform the PRACH repetitions, the terminal device performs transmission of the PRACH on one selected transmission resource. Correspondingly, the network device may further include: the network device used to receive PRACH. One transmission resource selected by the terminal device can be one transmission resource selected according to the existing protocol regulations, which will not be described in detail.

The above transmission resource may specifically refer to a PRACH occasion. The PRACH occasion may be a time-frequency resource, and the PRACH occasion may also be referred to as an RO. It should be understood that in the following description of the present disclosure, unless otherwise specified, the transmission resource has the same meaning as the RO, a target transmission resource has the same meaning as a target RO, and an available transmission resource has the same meaning as an available RO.

In this embodiment, regarding how the terminal device and the network device specifically determine the number of the PRACH repetitions, and how the terminal device and the network device specifically determine processing of a plurality of target transmission resources, a description will be given on the basis of M second downlink signals, and the M second downlink signals refer to downlink signals used by the terminal device. Therefore, the M second downlink signals are firstly described.

Optionally, the M second downlink signals are specified by the network device for the terminal device. The M second downlink signals are indicated by fifth information. The M second downlink signals are indicated by the network device through the fifth information. The fifth information may carry index numbers (or numbers, or identifiers) of the M second downlink signals. Specifically, the network device sends the fifth information. Correspondingly, the terminal device receives the fifth information, and determines the M second downlink signals based on the fifth information. The fifth information may be carried by any one of DCI, RRC signaling, MAC CE, or system information, etc. In a case where the fifth information is carried by the DCI, the fifth information is carried by the first DCI. The definition of the first DCI has been explained in the above embodiments and will not be repeated here. Exemplarily, if the second downlink signal is the second SSB, the fifth information may be the SS/PBCH index carried by field 5 in the first DCI. The relevant description of the SS/PBCH index is the same as that in the above embodiments and will not be repeated here.

Optionally, the M second downlink signals are determined by the terminal device. The processing of the terminal device may further include: selecting, by the terminal device, based on measurement results respectively corresponding to a plurality of downlink signals, the M second downlink signals from the plurality of downlink signals. M is configured by the network device or preset. For example, the network device may specify M for the terminal device; or, the network device and the terminal device may respectively preset the same number M. M may be 1, or may be an integer greater than 1, and all possible values thereof are not limited here. Here, the M second downlink signals may be the same as or different from the first downlink signals.

Selecting the M second downlink signals from the plurality of downlink signals includes one of: randomly selecting M downlink signals from all downlink signals as the M second downlink signals; selecting M second downlink signals with the largest measurement results from the plurality of downlink signals; determining the M second downlink signals based on downlink signals whose measurement results are greater than the first threshold value, in a case where measurement results of downlink signals of the plurality of downlink signals are greater than the first threshold value. That is, the terminal device can randomly select the M second downlink signals from all downlink signals. Alternatively, regardless of whether the measurement results of the downlink signals are greater than the first threshold value, only M second downlink signals with the largest measurement results are selected. Alternatively, considering whether the measurement results of downlink signals are greater than the first threshold, the second downlink signal is selected as much as possible from the downlink signals whose measurement results are greater than the first threshold.

Determining, based on the downlink signals whose measurement results are greater than the first threshold value, the M second downlink signals, includes one of: in a case where the number of downlink signals whose measurement results are greater than the first threshold value is no less than M, selecting the M second downlink signals from the downlink signals whose measurement results are greater than the first threshold value; in a case where the number of downlink signals whose measurement results are greater than the first threshold value is less than M, taking the downlink signals whose measurement results are greater than the first threshold value and some downlink signals of the downlink signals whose measurement results are not greater than the first threshold value as the M second downlink signals.

Specifically, in the process of considering whether the measurement results of downlink signals are greater than the first threshold value, there may be a situation where the number K of downlink signals whose measurement results are greater than the first threshold value is equal to M. In this case, the terminal device can take all downlink signals whose measurement results are greater than the first threshold value as the M second downlink signals. For example, there may be a situation where the number K of downlink signals whose measurement results are greater than the first threshold value is greater than M. In this case, the terminal device can randomly select the M second downlink signals from the downlink signals whose measurement results are greater than the first threshold value, or can also select M second downlink signals with the largest measurement results. For example, there may be a situation where the number K of downlink signals whose measurement results are greater than the first threshold value is less than M. In this case, the terminal device can take all K downlink signals greater than the the first threshold value as K second downlink signals, and then select M-K second downlink signals with the largest measurement results from remaining downlink signals whose measurement results are not greater than the first threshold value.

It should be noted that M can also be referred to as the number of selected downlink signals in some examples. For example, if the downlink signal is SSB, M can also be represented as "SSB_selected_number".

Next, a detailed description is given on how the terminal device and the network device specifically determine the number of the PRACH repetitions, and how the terminal device and the network device specifically determine a plurality of target transmission resources.

In a possible implementation, the number of the PRACH repetitions is related to a second parameter. The second parameter is used to indicate the number of downlink signals associated with one transmission resource.

First of all, it should be noted that in a case where the terminal device only uses the first information to determine to perform the PRACH repetitions, or the terminal device uses the first information and the second information to determine to perform the PRACH repetitions and the second information does not include the first parameter, the terminal device can use the second parameter to determine the number of the PRACH repetitions.

Exemplarily, if the downlink signal is SSB, the second parameter may be SSB_per_RO in the above embodiments. The SSB_per_RO configured in the system can be represented as ssb-perRACH-occasion, and can be specifically carried by any one of the following information: parameters configured by a high-level layer, the parameters configured by the high-level layer can specifically be ssb-perRACH-OccasionAndCB-PreamblesPerSSB (the number of SSBs associated with one RO, and the number of contention-based preambles of each SSB on each valid RO); msgA in two-step random access, parameters specifically carried by msgA can be expressed as msgA-SSB-PerRACH-OccasionAndCB-PreamblesSSB (the number of SSBs associated with one RO in msgA, and the number of contention-based preambles of each SSB on each valid RO); ssb-perRACH-Occasion carried in configuration message of contention free random access (CFRA); ssb-PerRACH-OccasionTwoStepRA carried in the configuration message of CFRA (2-step random access); ssb-perRACH-Occasion carried in system information (SI)- request configuration (RequestConfig); ssb-perRACH-Occasion carried in BeamFailureRecoveryConfig. It should be noted that, in a case where the SSB-per-RO is configured through any one of the above information, a value of the SSB-per-RO can be configured as {oneEighth (1/8), oneFourth (1/4), oneHalf (1/2), one, two, four, eight, sixteen}. In a case where the downlink signal is other types of downlink signals, for example, the downlink signal is CSI-RS, the second parameter may be represented as CSI-RS_per_ RO, etc., and the second parameters corresponding to various types of downlink signals are not exhaustive here.

The second parameter may be a positive number. For example, the second parameter may be less than 1, or may be no less than 1. In a case where the second parameter is no less than 1, the number of downlink signals associated with any transmission resource in one mapping cycle is no less than 1. That is, in one mapping cycle, one or more downlink signals can be mapped to the same transmission resource. In a case where the second parameter is less than 1, the number of downlink signals associated with any transmission resource in one mapping cycle is less than 1. That is, one downlink signal can be mapped to a plurality of transmission resources in one mapping cycle, and different downlink signals are mapped to different transmission resources.

The above mapping cycle may be represented as a mapping cycle, or, in some possible cases, the mapping cycle may be called an RO mapping cycle. The mapping cycle may include transmission resources to which a plurality of downlink signals are mapped. The plurality of downlink signals include M second downlink signals. The plurality of downlink signals may refer to all downlink signals (which may be all configured downlink signals, or all downlink signals actually used in communication), i.e., all downlink signals in the system. Accordingly, one mapping cycle may include all transmission resources to which all downlink signals are mapped, and each transmission resource of all the transmission resources is used to map one or more downlink signals. The M second downlink signals may refer to downlink signals used by the terminal device.

It should be understood that the number of transmission resources included in one mapping cycle is related to the number of all downlink signals and the second parameter. For example, the downlink signal is SSB and the second parameter is SSB_per_RO (assuming that SSB-per-RO is represented as N). The number of transmission resources included in one mapping cycle may be determined by multiplying a reciprocal of SSB_per_RO by the number of all SSBs. In a case where the value of N is less than 1, each SSB can be associated with 1/N ROs. Taking FIG. 4 as an example, in part 402 of FIG. 4, SSB_per_RO=1/2, 1 SSB is mapped to 2 consecutive ROs, the total number of SSBs is 8, and one mapping cycle can include 16 ROs. In a case where the value of N is no less than 1, each SSB can only be associated with one RO. For example, in part 403 of FIG. 4 , SSB_per_ RO=1, each RO is used to map one SSB, the total number of SSBs is 8, and one mapping cycle can include 8 ROs. In part 404 of FIG. 4, SSB_per_RO=2, each RO is used to map 2 SSBs, and the total number of SSBs is equal to 8, and one mapping cycle may include 4 ROs. The above is only an example and all possible situations are not exhaustive. It should be noted that in one mapping cycle, ROs can be arranged from low frequency to high frequency in the frequency domain and arranged in chronological order in the time domain. With reference to FIG. 4, in one mapping cycle, ROs can be arranged from bottom to top and from left to right.

In some possible implementations, the second parameter is no less than 1.

In a case where the second parameter is no less than 1, the number of the PRACH repetitions is equal to one of: a first value, the first value being equal to M multiplied by the second parameter, and M being the number of second downlink signals, and M being a positive integer; a second value, the second value being equal to M multiplied by a first preset value.

In one example, in a case where the second parameter is no less than 1, the number of the PRACH repetitions is equal to the first value, the first value is equal to M multiplied by the second parameter, M is the number of second downlink signals, and M is a positive integer. Specifically, in a case where the second parameter is equal to 1 and M is also equal to 1, the terminal device can determine that the number of the PRACH repetitions can be equal to 1, that is, it can determine that the PRACH repetitions is not performed at this time. In a case where either the second parameter or M is greater than 1, the terminal device may determine that the number of the PRACH repetitions may be equal to the second parameter multiplied by M. For example, if the second downlink signal is the second SSB, assuming that the second parameter is SSB-per-RO and the value of SSB-per-RO is represented as N, the number of the PRACH repetitions can be SSB_selected_number*N. The description of SSB_selected_number has been described in the above embodiments and will not be repeated here.

In yet another example, in a case where the second parameter is no less than 1, the number of the PRACH repetitions is equal to a second value, and the second value is equal to M multiplied by the first preset value. The first preset value may be set according to actual conditions. The first preset value may be 4, 8, more or less, which are not exhaustive here. The first preset value may be preset by both the terminal device and the network device, or may be sent in advance by the network device to the terminal device. The manner of setting the first preset value is not limited here. As long as both the terminal device and the network device set the same first preset value, they are within the protection scope of this embodiment. For example, if the second downlink signal is the second SSB, assuming that the second parameter is SSB-per-RO and the value of SSB-per-RO is represented as N, the number of the PRACH repetitions can be SSB_selected_number*first preset value. The description of SSB_selected_number has been described in the above embodiments and will not be repeated here.

It should be noted that, in actual use, any one of the above several examples in which the second parameter is no less than 1 can be specified, or the terminal device and the network device can negotiate the use of any one of them. As long as ways in which the terminal device and the network device determine the number of the PRACH repetitions are the same, they are all within the protection scope of this embodiment.

In a case where the second parameter is no less than 1, processing of the terminal device determining a plurality of target transmission resources for the PRACH repetitions is described as follows.

In first manner, the plurality of target transmission resources include a plurality of transmission resources that are continuous in one or more mapping cycles. It should be noted that the one or more mapping cycles are one or more continuous mapping cycles. Here, the plurality of transmission resources that are continuous in the one or more mapping cycles, no matter whether the plurality of transmission resources are associated with any one of the M second downlink signals, can be used to perform the PRACH repetitions. In this implementation, since the second parameter is no less than 1, one downlink signal is mapped to only one transmission resource in one mapping cycle, and one or more downlink signals may be mapped to the same transmission resource.

A starting target transmission resource of the plurality of target transmission resources may be a first second available transmission resource in a first mapping cycle. Specifically, the first second available transmission resource in the first mapping cycle may be: a second available transmission resource associated with a second downlink signal with the smallest index number among the M second downlink signals in the first mapping cycle. The first mapping cycle may refer to a first mapping cycle of the terminal device after entering the random access process. The definition of the mapping cycle has been described in the above embodiments and will not be repeated here. The method for determining the starting target transmission resource of the plurality of target transmission resources may include: determining second available transmission resources respectively associated with M second downlink signals in the first mapping cycle; taking a second downlink signal with the smallest index number among the M second downlink signals as the first second downlink signal, and taking the only second available transmission resource associated with the first second downlink signal as the starting target transmission resource of the plurality of target transmission resources. The M second downlink signals may be respectively associated with respective index numbers, and the index number may also be referred to as any one of an identifier, a number, etc., and as long as it can be used to uniquely identify each downlink signal, it is within the protection scope of this embodiment.

In the first mapping cycle, the second available transmission resources respectively associated with the M second downlink signals are determined based on the second parameter in a case where the second parameter is no less than 1. Specifically, in a case where the second parameter is no less than 1, the number of downlink signals associated with one transmission resource in the first mapping cycle is determined based on the second parameter. A transmission resource associated with each downlink signal in the first mapping cycle is determined based on the number of downlink signals associated with the one transmission resource. One second available transmission resource associated with each second downlink signal in the first mapping cycle is determined based on index numbers of the M second downlink signals. For example, combined with part 801 of FIG. 8, the first second downlink signal is a first second SSB, and the second parameter is SSB_per_RO, there are 8 SSBs in total, and the second parameter SSB_per_RO =8. That is, one RO can map 8 SSBs, all SSBs are mapped to the same RO, and each RO is one mapping cycle. Assuming that an index number of the first second SSB is 6 and RO 8011 is the first mapping cycle, the second available RO associated with the first second SSB is RO 8011, and RO8011 is the starting target RO among a plurality of target ROs. Taking part 802 of FIG. 8 as an example, there are 8 SSBs in total, SSB_per_RO =2. That is, one RO can map 2 SSBs, and one mapping cycle includes 4 ROs at one time domain position. For example, 8021 in FIG. 8 indicates one mapping cycle. Assuming that the index number of the first second SSB is 6 and mapping cycle 8021 is the first mapping cycle, RO 8022 is the second available RO associated with the first second SSB, and RO8022 is the starting target RO among a plurality of target ROs. The above descriptions are merely illustrative and all possible situations are not exhaustive.

Optionally, in a case where the terminal device performs the PRACH repetitions, the PRACH carries a first-type preamble. The first-type preamble is a preamble used when performing the PRACH repetitions. The first-type preamble is preset or configured by the network device.

Here, it should be pointed out that the PRACH will also carry a preamble in a case where no repetitions is performed, and the preamble that the PRACH needs to carry is determined in a manner specified in the relevant protocol. Exemplarily, NR defines two types of preambles: long preamble and short preamble. In some related protocols, a preamble sequence of random access supports two lengths of preambles: a long preamble based on a length of L=839 and a short preamble based on a length of L=139. An exemplary description is given in conjunction with the following Table 2 and Table 3.

**Table 2**

| Preamble format | Length | Subcarrier spacing | Types of supported restriction sets |
|---|---|---|---|
| 0 | 839 | 1.25 kHz | Type A, Type B |
| 1 | 839 | 1.25 kHz | Type A, Type B |
| 2 | 839 | 1.25 kHz | Type A, Type B |
| 3 | 839 | 5 kHz | Type A, Type B |

**Table 3**

| Preamble format | Length | | | Subcarrier spacing |
|---|---|---|---|---|
| A1 | 139 | 1151 | 571 | 15 · 2*^{µ}kHz* |

In some related protocols, as shown in Table 2, two new lengths of the short preamble are introduced: L=1151 and L=571. PRACH subcarrier spacings supported by the long preamble of L=839 are 1.25 kHz and 5 kHz. PRACH subcarrier spacings supported by the short preamble of L=139 are 15 kHz, 30 kHz, 60 kHz, 120 kHz. PRACH subcarrier spacings supported by the short preamble of L=1151 and 571 are 15 kHz and 30 kHz. Long preamble is only used in NR licensed spectrum and supports unrestricted sets and restricted sets. The restricted sets can include type A and type B. The short preamble only supports unrestricted sets. As shown in Table 3, the short preamble with a sequence length of 139 can be used for both licensed spectrum and unlicensed spectrum; and the short preamble with a sequence length of 1151 and 571 can only be used in the shared spectrum channel access scenario. In the above Table 3, only the preamble format A1 is exemplified. The actual protocol further includes other types of formats, which are not exhaustive here. In Table 3, *µ* represents subcarrier spacing configuration, and a value thereof can be 0, 1, 2, 3, etc., without limitation. The terminal device can select the preamble to be used according to the current scenario, and this embodiment does not limit all possible situations.

In a case where the first-type preamble is preset, it is preset in both the terminal device and the network device. In a case where the first-type preamble is configured by the network device, the processing of the network device may further include: sending, by the network device, sixth information to the terminal device. The sixth information includes the first-type preamble. Correspondingly, the terminal device can receive the sixth information. The number of first-type preambles can be one or more, that is, one or more first-type preambles can constitute a subset of first-type preambles. The terminal device can select any first-type preamble from the one or more first-type preambles as a first-type preamble carried in this PRACH repetitions. Alternatively, different first-type preambles are related to different scenarios; and the terminal device selects one first-type preamble from one or more first-type preambles based on the current scenario as the first-type preamble carried in the this PRACH repetitions. The scenarios may include macro cell coverage, super large cell coverage, etc., which are not exhaustive here.

In this implementation, the second parameter is no less than 1, and the plurality of target transmission resources are a plurality of transmission resources that are continuous in one or more mapping cycles. Receiving, by the network device, the PRACH specifically includes: receiving, by the network device, the PRACH sent by the terminal device, and parsing, by the network device, the preamble carried by the PRACH; determining, by the network device, in a case where the preamble carried by the PRACH is a first-type preamble, that the terminal device performs the PRACH repetitions, receiving, by the network device, the repetitive PRACHs by the terminal device on the plurality of target transmission resources.

Specifically, regardless of whether the M second downlink signals are indicated by the network device or determined by the terminal device, the manner in which the network device determines whether the terminal device performs the PRACH repetitions can be: the network device, in a case of receiving the PRACH sent by the terminal device, parsing the preamble carried by the PRACH; the network device, in a case of determining that the preamble carried by the PRACH is a first-type preamble, determining that the terminal device performs the PRACH repetitions.

After determining that the terminal device performs the PRACH repetitions, the network device may further determine the number of the PRACH repetitions and target transmission resources. In a case where the M second downlink signals are indicated by the network device, the manner in which the network device determines the number of the PRACH repetitions and the target transmission resources is the same as the terminal device, and no repeated explanation is given. In a case where the M second downlink signals are determined by the terminal device, the manner in which the network device determines the number of the PRACH repetitions is the same as the processing method of the above terminal device, and no repeated explanation is given. The network device may determine the target transmission resources in the following manner. The network device may use a first transmission resource currently parsed for transmitting PRACH as a starting target transmission resource; and then the network device may, based on the determined number of the PRACH repetitions, receive and demodulate PRACH on the continuous transmission resources with the above number of repetitions at and after the starting target transmission resource.

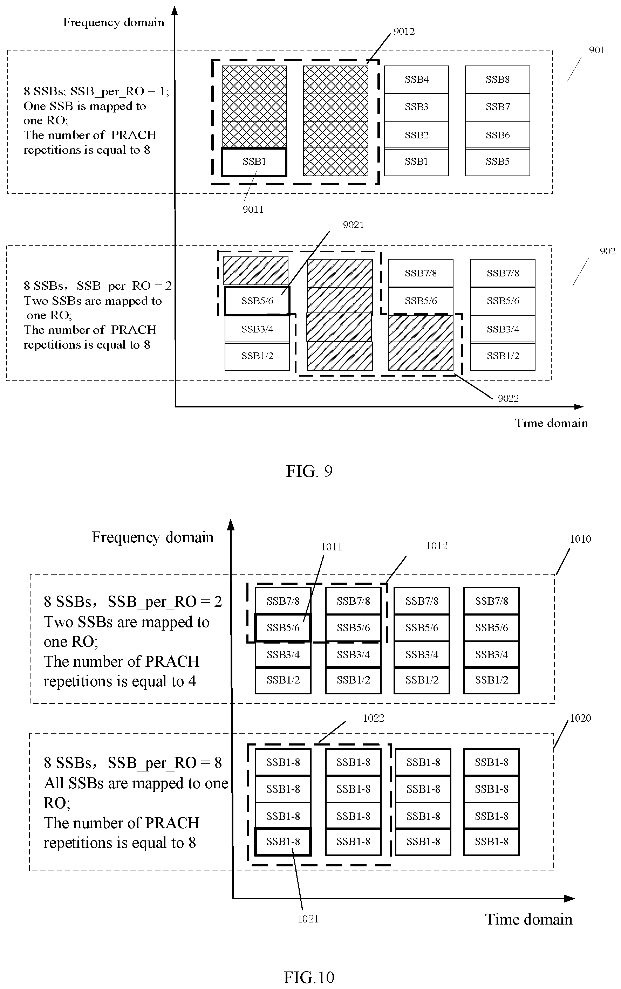

For example, the first second downlink signal is the first second SSB, and the second parameter is SSB_per_RO. For example, combined with 901 part of FIG. 9, SSB_per_RO = 1, one mapping cycle includes 8 ROs, the number of the PRACH repetitions is equal to 8, the first second SSB is SSB1, and a starting target RO of a plurality of target ROs is the only second available RO associated with SSB1, namely RO 9011 in FIG. 9. The plurality of target ROs 9012 include 7 continuous ROs starting from RO 9011 and thereafter in the first mapping cycle. Taking part 902 of FIG. 9 as an example, SSB_per_RO = 2, one mapping cycle includes 4 ROs, the number of the PRACH repetitions is equal to 8, the first second SSB is SSB 5, and the starting target RO of the plurality of target ROs is the second available RO associated with SSB 5, i.e., RO 9021 in FIG. 9. The plurality of target ROs 9022 include 7 continuous ROs starting from RO 9021 and thereafter in the first mapping cycle. The above descriptions are merely illustrative and all possible situations are not exhaustive.

The second manner, the plurality of target transmission resources include one or more second available transmission resources in each mapping cycle of one or more mapping cycles. Each second available transmission resource of the one or more second available transmission resources is associated with one or more second downlink signals of M second downlink signals.

The one or more second available transmission resources in each mapping cycle include: one second available transmission resource associated with each second downlink signal of the M second downlink signals in each mapping cycle. One second available transmission resource associated with each second downlink signal is determined based on the second parameter in a case where the second parameter is no less than 1. Specifically, the method for determining one or more second available transmission resources in each mapping cycle may include: in a case where the second parameter is no less than 1, determining the number of downlink signals associated with one transmission resource based on the second parameter; determining a transmission resource associated with each downlink signal in one mapping cycle based on the number of downlink signals associated with one transmission resource; determining one second available transmission resource associated with each second downlink signal in one mapping cycle based on the index numbers of the M second downlink signals; and taking a set of one second available transmission resource associated with each second downlink signal of the M second downlink signals in each mapping cycle as one or more second available transmission resources in each mapping cycle.

In this manner, the method for determining the starting target transmission resource of the plurality of target transmission resources is the same as the above method and will not be repeated.

Optionally, in a case where the terminal device performs PRACH repetitions, the PRACH carries a first-type preamble. The description of the first-type preamble is the same as that in the above embodiment and will not be repeated herein. In this implementation, regardless of whether the M second downlink signals are indicated by the network device or determined by the terminal device, the manner in which the network device determines that the terminal device performs PRACH repetitions may be the same as that in the above embodiment and will not be repeated here.

After determining that the terminal device performs the PRACH repetitions, the network device may further determine the number of the PRACH repetitions and the target transmission resources. In a case where the M second downlink signals are indicated by the network device, the manner in which the network device determines the number of the PRACH repetitions and the target transmission resources is the same as the terminal device, and no repeated explanation is given. In a case where the M second downlink signals are determined by the terminal device, the manner in which the network device determines the number of the PRACH repetitions is the same as the processing method of the above terminal device, and no repeated explanation is given.

There may be several different manners in which the network device determines the target transmission resources. Specifically, in a case where there is only one transmission resource in one mapping cycle. That is, in a case where the one transmission resource is associated with all downlink signals, the network device may take the first transmission resource currently parsed for transmitting PRACH as the starting target transmission resource; and then the network device, based on the determined number of the PRACH repetitions, receives and demodulates PRACH on the continuous transmission resources with the above number of repetitions at and after the starting target transmission resource. In a case where there are a plurality of transmission resources in one mapping cycle, that is, one transmission resource is associated with part of all downlink signals, the network device can, after receiving contents corresponding to all the transmission resources in one mapping cycle, parse whether the PRACH carries the first-type preamble on each transmission resource, and use the transmission resources occupied by the PRACH carrying the first-type preamble in one mapping cycle as one or more second available transmission resources occupied by the terminal device in the mapping cycle. In combination with positions of one or more second available transmission resources determined by the network device in one mapping cycle and the number of the PRACH repetitions determined by the above network device, the network device can determine second available transmission resources in each mapping cycle of one or more mapping cycles, and use the one or more second available transmission resources in each mapping cycle of the one or more mapping cycles as the target transmission resources. After determining the target transmission resources, the network device may perform demodulation processing based on the repetitive PRACHs received on the target transmission resources. The specific processing method is not limited in this embodiment.

For example, the M second downlink signals is M second SSBs, and the second parameter is SSB_per_RO. For example, combined with part 1010 of FIG. 10, SSB_per_ RO = 2, one mapping cycle includes 4 ROs, the number of the PRACH repetitions is equal to 4, and the M second SSBs are SSB 5 and SSB7 respectively. Second available transmission resources associated with SSB 5 and SSB7 are the 3rd RO and the 4th RO in one mapping cycle. The starting target RO of the plurality of target ROs is the 3rd RO in the first mapping cycle, namely RO1011. The plurality of target ROs 1012 include: starting from the starting target RO in the first mapping cycle (including the starting target RO), the 4th RO, the 3rd RO and the 4th RO in the second mapping cycle. Taking part 1020 of FIG. 10 as an example, SSB_per_RO =8, one mapping cycle includes only 1 RO, the number of the PRACH repetitions is equal to 8, the M second SSBs are SSB1, SSB2, SSB3 respectively, and the second available transmission resource associated with SSB1, SSB2, SSB3 is the only RO in one mapping cycle. The starting target RO of the plurality of target ROs is RO 1021 in the first mapping cycle, and the plurality of target ROs 1022 include: 8 ROs in the 1st mapping cycle to the 8th mapping cycle. The above descriptions are merely illustrative and all possible situations are not exhaustive.

In some possible implementations, the second parameter is less than 1. In a case where the second parameter is less than 1, the number of the PRACH repetitions is equal to one of: a third value, the third value being a sum of the number of one or more first available transmission resources respectively associated with the M second downlink signals in one mapping cycle, and M being a positive integer; a fourth value, the fourth value being equal to M multiplied by a second preset value.

The number of the PRACH repetitions is equal to a third value. The third value is a sum of the number of one or more first available transmission resources respectively associated with the M second downlink signals in one mapping cycle; and M is a positive intege.

The network device may not indicate one or more first available transmission resources respectively associated with the M second downlink signals, and the terminal device may use all available transmission resources respectively associated with the M second downlink signals as first available transmission resources. In this case, the number of all first available transmission resources associated with each second downlink signal is equal to a reciprocal of the second parameter, and first available transmission resources associated with different second downlink signals are different. If the second parameter is represented as N, the number of all first available transmission resources associated with each second downlink signal in one mapping cycle is equal to 1/N, and the third value is equal to M multiplied by 1/N. For example, if the second downlink signal is the second SSB, assuming that the second parameter is SSB-per-RO and the value of SSB-per-RO is represented as N, the number of the PRACH repetitions can be SSB_selected_number*(1/N).

Alternatively, the network device may indicate one or more first available transmission resources respectively associated with the M second downlink signals, and the terminal device may determine one or more first available transmission resources respectively associated with the M second downlink signals within one mapping cycle according to the indication of the network device. In this case, the number of all first available transmission resources associated with each second downlink signal within one mapping cycle may be less than or equal to the reciprocal of the second parameter, first available transmission resources associated with different second downlink signals are different, and the number of first available transmission resources associated with different second downlink signals may be the same or different. Therefore, the third value is a sum of the number of one or more first available transmission resources respectively associated with the M second downlink signals in one mapping cycle.

Alternatively, the number of the PRACH repetitions is equal to a fourth value. The fourth value is equal to M multiplied by a second preset value. The second preset value may be set according to actual conditions, and may be 2, 4, 8, or larger or smaller, which are not exhaustive here. Here, the second preset value and the first preset value may be the same or different, which are both within the protection scope of this embodiment. It should be understood that the second preset value needs to be preset on both the terminal device and the network device. For example, the administrator may configure the second preset value on the terminal device and the network device respectively. For another example, the network device may determine the second preset value according to a protocol and send it to the terminal device through system broadcast or other information, so that the terminal device can obtain and save the second preset value in advance. For example, if the second downlink signal is the second SSB, assuming that the second parameter is SSB-per-RO and the value of SSB-per-RO is represented as N, the number of the PRACH repetitions can be SSB_selected_number * (multiplied by) the second preset value.

Alternatively, the number of the PRACH repetitions is equal to a minimum value of the third value and the fourth value. That is, the number of the PRACH repetitions = min{third value, fourth value}. For example, if the second downlink signal is the second SSB, assuming that the second parameter is SSB-per-RO and the value of SSB-per-RO is represented as N, the third value is equal to SSB_selected_number * (1/N), the fourth value is equal to SSB_selected_number * second preset value, and the number of the PRACH repetitions can be min{SSB_selected _number * (1/N), SSB_selected_number * second preset value}.

It should be noted that, in actually use, any one of the above several examples in which the second parameter is less than 1 can be specified or negotiated in advance by the terminal device and the network device respectively. As long as the terminal device and the network device determine the number of the PRACH repetitions in the same way, they are all within the protection scope of this embodiment. In the above description on determining the number of the PRACH repetitions, it may be necessary to determine the third value in combination with the number of one or more first available transmission resources respectively associated with M second downlink signals in one mapping cycle. First, a manner for determining one or more first available transmission resources associated with each second downlink signal of the M second downlink signals in the one mapping cycle is described.

In a case where the second parameter is less than 1, the one or more first available transmission resources associated with each second downlink signal of M second downlink signals in one mapping cycle include one of: one or more available transmission resources associated with each second downlink signal of the M second downlink signals in one mapping cycle; designated transmission resources associated with each second downlink signal of the M second downlink signals in one mapping cycle; available transmission resources in a subset of transmission resources associated with each second downlink signal of the M second downlink signals in one mapping cycle; available transmission resources between a starting available transmission resource and an ending available transmission resource associated with each second downlink signal of the M second downlink signals in one mapping cycle. The starting available transmission resource and/or the ending available transmission resource associated with each second downlink signal are designated transmission resources associated with each second downlink signal.

Optionally, in a case where the second parameter is less than 1, the one or more first available transmission resources associated with each second downlink signal of the M second downlink signals in one mapping cycle include: one or more available transmission resources associated with each second downlink signal of the M second downlink signals in the one mapping cycle.

In one case, one or more available transmission resources associated with each second downlink signal within one mapping cycle can be determined by the terminal device based only on the second parameter without combining other information sent by the network device. Specifically, the one or more available transmission resources associated with each second downlink signal in one mapping cycle may be determined according to the second parameter and the index number of each second downlink signal. For example, the processing of the terminal device may include: in a case where the second parameter is less than 1, determining the number of transmission resources associated with one downlink signal based on the second parameter; determining a plurality of available transmission resources associated with each downlink signal within one mapping cycle based on the number of transmission resources associated with one downlink signal. Furthermore, the terminal device can determine one or more available transmission resources associated with each second downlink signal in one mapping cycle based on the index number of each second downlink signal and the plurality of available transmission resources associated with each downlink signal in one mapping cycle; and use the one or more available transmission resources associated with each second downlink signal in one mapping cycle as one or more first available transmission resources associated with each second downlink signal in the one mapping cycle.

In another case, one or more available transmission resources associated with each second downlink signal in one mapping cycle may be determined according to fourth information sent by the network device. The processing of the network device may include: sending, by the network device, fourth information. The fourth information is used by the terminal device to determine one or more available transmission resources associated with each second downlink signal of the M second downlink signals within one mapping cycle in a case where the second parameter is less than 1. Correspondingly, the processing of the terminal device may also include: receiving, by the terminal devic, the fourth information. The fourth information is used to determine one or more available transmission resources associated with each second downlink signal of the M second downlink signals in one mapping cycle in a case where the second parameter is less than 1. For example, the M second downlink signals are M second SSBs. In a case where a value of the second parameter (SSB-per-RO) N is less than 1, each SSB can be associated with 1/N ROs, but not all ROs associated with each SSB may be used to send PRACH. In this case, the network device will further indicate one or more available PRACH occasions (ROs) associated with each second SSB in the M second SSBs to the terminal device through the fourth information. One or more available ROs associated with each second SSB are at least part of 1/N ROs associated with each second SSB.

Optionally, the fourth information may include second indication information. The second indication information includes one or more available transmission resources associated with each downlink signal of all downlink signals within one mapping cycle. For example, the fourth information includes: relevant information of each downlink signal, and index numbers corresponding to one or more available transmission resources associated with the downlink signal. After receiving the fourth information, the terminal device can determine one or more available transmission resources associated with each second downlink signal of the M second downlink signals from the fourth information based on the relevant information corresponding to the M second downlink signals respectively. Here, the relevant information of each downlink signal may be a number, identification, ID, index number, etc. of the downlink signal.

Optionally, the fourth information includes a bit map; and the bit map is used to indicate one or more available transmission resources associated with each second downlink signal of the M second downlink signals in one mapping cycle.

Specifically, the bit map is used to indicate one or more available transmission resources associated with each downlink signal of a plurality of downlink signals in one mapping cycle. The plurality of downlink signals include the M second downlink signals. The bit map may specifically include sub-bit maps corresponding to the plurality of downlink signals respectively. The number of bits included in a sub-bit map corresponding to each downlink signal may be equal to the number of transmission resources included in one mapping cycle. Each downlink signal corresponds to one sub-bit map, and each bit may correspond to one transmission resource. A value of each bit is used to indicate whether a transmission resource at a corresponding position is an available transmission resource for the downlink signal. In a case where the value of one bit is a first specified value, it is used to indicate that the transmission resource at the corresponding position is an available transmission resource for the downlink signal. In a case where the value of one bit is a second specified value, it is used to indicate that the transmission resource at the corresponding position is not an available transmission resource for the downlink signal. Here, the first specified value is different from the second specified value, the first specified value is 0 and the second specified value is 1, or the first specified value is 1 and the second specified value is 0, or they can also be set to other specified values, which are not enumerated here, as long as both the terminal device and the network device use the same meaning value. After receiving the fourth information, the terminal device can perform the following processing. Based on the fourth information, the terminal device determines the i-th sub-bit map associated with the i-th second downlink signal of the M second downlink signals, and uses a transmission resource corresponding to a position where a value of a bit in the i-th sub-bit map is the first specified value as an available transmission resource associated with the i-th second downlink signal. i is a positive integer less than or equal to M.

Alternatively, the bit map is a total bit map. Since transmission resources associated with different downlink signals are different in a case where the second parameter is less than 1, the number of bits included in the bit map can be configured to be equal to the number of transmission resources included in one mapping cycle. Only a value of each bit in the bit map indicates whether the transmission resource at the position in one mapping cycle is an available transmission resource. After receiving the fourth information, the terminal device can perform the following processing: determining, by the terminal device, based on the one or more transmission resources associated with the i-th second downlink signal of the M second downlink signals, one or more bits at positions corresponding to the one or more transmission resources in the bit map included in the fourth information; and using transmission resources corresponding to positions in the one or more bits whose values are the first specified value as the available transmission resources associated with the i-th second downlink signal. For example, there are a total of 8 downlink signals, one mapping cycle includes 16 transmission resources, and a bit map includes a total of 16 bits. Assuming that values of even-numbered bits are set to the first specified value, and values of the remaining bits are set to the second specified value, it can indicate that each downlink signal is configured with one available transmission resource. If the i-th second downlink signal is the first downlink signal of all downlink signals, it can be determined that the second transmission resource in one mapping cycle is the available transmission resource of the i-th second downlink signal. Here, the i-th second downlink signal is any one of the M second downlink signals. A description is given only by taking the i-th second downlink signal as an example. In practice, the processing of each second downlink signal of the M second downlink signals is the same as that of the i-th second downlink signal, and no further details are given here.

It should be understood that, in the above processing of determining one or more first available transmission resources associated with each second downlink signal of the M second downlink signals in one mapping cycle based on the fourth information, the number of first available transmission resources associated with different second downlink signals may be the same or different, because the network device may indicate different available transmission resources for different downlink signals according to actual conditions.

In the above situation, the above fourth information may be carried by any one of DCI, RRC signaling, etc. In one example, the fourth information and the second information can be carried by different messages. In another example, the fourth information and the second information may be carried by the same message. That is, the second information and the fourth information are included in one message at the same time. In a case where the second information and the fourth information are carried by the same message, and in a case where DCI format 1_0 (i.e., the first DCI) is used to carry the second information, the fourth information may be carried by "field 6, PRACH mask index" in DCI format 1_0, and an information domain of "field 6, PRACH mask index" needs to be redefined.

Optionally, in a case where the second parameter is less than 1, the one or more first available transmission resources associated with each second downlink signal of the M second downlink signals in one mapping cycle include one of: designated transmission resources associated with each second downlink signal of the M second downlink signals in the one mapping cycle; available transmission resources in a subset of transmission resources associated with each second downlink signal of the M second downlink signals in the one mapping cycle. The designated transmission resources associated with each second downlink signal, or the subset of transmission resources associated with each second downlink signal may be determined by the terminal device according to the fourth information sent by the network device. In this case, the fourth information may be carried by the first DCI. Specifically, the fourth information is carried by "field 6" of the first DCI, and the fourth information is specifically a PRACH mask index. The value of the fourth information (i.e., the PRACH mask index) is used to determine a position of the PRACH resource of the non-contention-based random access process. In a case where the downlink signal is SSB, definitions of various values of the fourth information may be specifically shown in Table 1:

**Table 1**

| Value of fourth information | Available transmission resource(s) associated with SSB |
|---|---|
| 0 | all |
| 1 | Transmission resource with index number 1 |
| 2 | Transmission resource with index number 2 |
| 3 | Transmission resource with index number 3 |
| 4 | Transmission resource with index number 4 |
| 5 | Transmission resource with index number 5 |
| 6 | Transmission resource with index number 6 |
| 7 | Transmission resource with index number 7 |
| 8 | Transmission resource with index number 8 |
| 9 | Transmission resources with even index numbers |
| 10 | Transmission resources with odd index numbers |

The fourth information (i.e., PRACH mask index) is used only in a case where SSB_per_RO < 1. For example, if SSB_per_RO = 1/8, 1 SSB is mapped to 8 ROs. If the fourth information (i.e., PRACH mask index) = 3, PRACH occasion index 3 (i.e., the transmission resource with index number 3) is selected. Here, the transmission resource indicated by the index number is related to whether the index number is defined as 0 or 1 as the minimum value. For example, if the index number 0 is defined as the minimum value, the transmission resource with the index number 1 may refer to the second transmission resource associated with one SSB in one mapping cycle. If the index number 1 is defined as the minimum value, the transmission resource with the index number 1 may refer to the first transmission resource associated with one SSB in one mapping cycle. The PRACH mask index can be 0, which means that the network device only allocates a preamble to the terminal device, and the PRACH occasion in the frequency domain still needs to be selected by the UE itself. The transmission resource with the index number 1 in the Table 1 can be represented as "RO index 1", and representation manners of other transmission resources with index numbers 2 to 8 are similar to the above and are not described one by one. The transmission resources with even index numbers in the Table 1 can be represented as "every even RO"; and the transmission resources with odd index numbers in the Table 1 can be represented as "every odd RO". It should be understood that in addition to 0 to 10 shown in Table 1 above, the value of the fourth information may also include other reserved values. For example, the value of the fourth information may also include 11 to 15. These values can be reserved values, which are not limited in this embodiment.

Specifically, in a case where the value of the fourth information is within a first value range, it is used to determine the subset of transmission resources associated with each second downlink signal of the M second downlink signals in the one mapping cycle; and/or, in a case where the value of the fourth information is within a second value range, it is used to determine a designated transmission resource associated with each second downlink signal of the M second downlink signals in the one mapping cycle. The first value range is different from the second value range. The first value range may include 0, 9 and 10; and the second value range may be 1 to 8. The subset of transmission resources associated with each second downlink signal may include one or more available transmission resources. The number of designated transmission resources associated with each second downlink signal may be one.

Optionally, in a case where the second parameter is less than 1, the one or more first available transmission resources associated with each second downlink signal of the M second downlink signals in one mapping cycle include: available transmission resources between a starting available transmission resource and an ending available transmission resource associated with each second downlink signal of the M second downlink signals in the one mapping cycle.

Here, the starting available transmission resource associated with each second downlink signal may be a designated transmission resource. The manner for determining the designated transmission resource associated with each second downlink signal has been described in the above embodiment and will not be described in detail here. Correspondingly, the ending available transmission resource associated with each second downlink signal may refer to the last transmission resource associated with the second downlink signal in one mapping cycle. For example, within one mapping cycle, there are 4 transmission resources associated with the i-th second downlink signal. Through the fourth information, it can be determined that the designated transmission resource associated with the i-th second downlink signal is the second transmission resource therein. The second transmission resource is used as the starting available transmission resource associated with the i-th second downlink signal, and the last transmission resource associated with the i-th second downlink signal, i.e., the fourth transmission resource is used as the ending available transmission resource associated with the i-th second downlink signal. Finally, it can be determined that one or more first available transmission resources associated with the i-th second downlink signal in one mapping cycle, include the second transmission resource to the fourth transmission resource associated with the i-th second downlink signal.

Alternatively, the ending available transmission resource associated with each second downlink signal may be a designated transmission resource. The manner for determining the designated transmission resource associated with each second downlink signal has been described in the above embodiment and will not be described in detail here. Correspondingly, the starting available transmission resource associated with each second downlink signal may refer to the first transmission resource associated with the second downlink signal in one mapping cycle. For example, within one mapping cycle, there are 4 transmission resources associated with the i-th second downlink signal. Through the fourth information, it can be determined that the designated transmission resource associated with the i-th second downlink signal is the second transmission resource therein. The second transmission resource is used as the ending available transmission resource associated with the i-th second downlink signal, and the first transmission resource associated with the i-th second downlink signal is used as the starting available transmission resource associated with the i-th second downlink signal. Finally, it can be determined that one or more first available transmission resources associated with the i-th second downlink signal in one mapping cycle, includes the first transmission resource to the second transmission resource associated with the i-th second downlink signal.

Alternatively, the value of the fourth information is redefined. For example, in a case where the value of the fourth information can be defined as being within the second value range, it is used to determine two designated transmission resources. For example, in a case where the value of the fourth information is 1, it is used to designate the first transmission resource and the second transmission resource as designated transmission resources. For example, in a case where the value of the fourth information is 2, it is used to designate the first transmission resource and the fourth transmission resources as designated transmission resources, and so on. This is only an illustrative description and does not represent a limitation on the value of the fourth information. In this case, the starting available transmission resource and the ending available transmission resource associated with each second downlink signal may be two designated transmission resources. For example, in one mapping cycle, there are 4 transmission resources associated with the i-th second downlink signal. Through the value of the fourth information, it can be determined that the designated transmission resources associated with the i-th second downlink signal are the first transmission resource and third transmission resource. The first transmission resource is used as the starting available transmission resource associated with the i-th second downlink signal, and the third transmission resource is used as the ending available transmission resource associated with the i-th second downlink signal. Finally, it can be determined that one or more first available transmission resources associated with the i-th second downlink signal in one mapping cycle, include the first transmission resource to the third transmission resource associated with the i-th second downlink signal.

It should be understood that, in the processing of determining one or more first available transmission resources associated with each second downlink signal of the M second downlink signals in one mapping cycle according to the value of the fourth information, the number of first available transmission resources associated with different second downlink signals is the same.

On the basis of the above implementation, a manner in which the terminal device determines a plurality of target transmission resources in this implementation is described as follows. The plurality of target transmission resources include a plurality of transmission resources that are continuous in one or more mapping cycles. Alternatively, the plurality of target transmission resources include one or more first available transmission resources associated with each second downlink signal of the M second downlink signals in each mapping cycle of one or more mapping cycles.

Optionally, the plurality of target transmission resources include a plurality of transmission resources that are continuous in one or more mapping cycles.

In this case, the starting target transmission resource of the plurality of target transmission resources is the first first available transmission resource associated with the first second downlink signal of the M second downlink signals in the first mapping cycle. In the first mapping cycle, the first first available transmission resource associated with the first second downlink signal of the M second downlink signals is one of: a first available transmission resource associated with the first second downlink signal of the M second downlink signals in the first mapping cycle; a first available transmission resource in a subset of transmission resources associated with the first second downlink signal of the M second downlink signals in the first mapping cycle; a designated transmission resource associated with the first second downlink signal of the M second downlink signals in the first mapping cycle.

The first second downlink signal may refer to the one with the smallest index number of the M second downlink signals.

The manner for determining one or more available transmission resources associated with each second downlink signal of the M second downlink signals in one mapping cycle has been described in the above embodiment. Here, the first available transmission resource associated with the first second downlink signal of the M second downlink signals within the first mapping cycle can be used as the starting target transmission resource of the plurality of target transmission resources.

Similarly, the manner for determining the subset of transmission resources associated with each second downlink signal of the M second downlink signals in one mapping cycle has benn described in the above embodiment, which is not described in detail here. The first available transmission resource in the subset of transmission resources associated with the first second downlink signal of the M second downlink signals in the first mapping cycle may be used as the starting target transmission resource of the plurality of target transmission resources.

The manner for determining the designated transmission resource associated with each second downlink signal of the M second downlink signals in one mapping cycle has been described in the above embodiment, which is not described in detail here. The designated transmission resource associated with the first second downlink signal of the M second downlink signals in the first mapping cycle may be used as the starting target transmission resource of the plurality of target transmission resources. It should be noted that another possibility of the above embodiment is to specify two designated transmission resources for each second downlink signal. In this case, the first designated transmission resource in the first second downlink signal in the first mapping cycle can be used as the starting target transmission resource of the plurality of target transmission resources.

Which of the above manners is used to determine the starting target transmission resource may be configured by the network device for the terminal device, or may be pre-negotiated by the terminal device and the network device, as long as the terminal device and the network device determine to use the same manner to determine the starting target transmission resource. In addition, which of the above manners is used to determine the starting target transmission resource may be related or unrelated to the manner for determining the number of the PRACH repetitions. For example, the number of the PRACH repetitions is equal to the fourth value, and the fourth value is equal to M multiplied by the second preset value. The terminal device can use any one of the above manners to determine the starting target transmission resource. For another example, the number of the PRACH repetitions are equal to the third value. The determination of the third value may need the network device to send the fourth information to the terminal device to determine the first available transmission resource for each second downlink signal. Therefore, in this case, the manner for determining the starting target transmission resource may be related to the content indicated by the fourth information. Illustratively, assuming that the fourth information indicates the designated transmission resource associated with the second downlink signal, the starting target transmission resource may be the designated transmission resource associated with the first second downlink signal in the first mapping cycle. Other situations are similar and are not exhaustive.

After the starting target transmission resource is determined, a plurality of transmission resources that continuous within one or more mapping cycles can be used as target transmission resources. It should be noted that, in addition to the starting target transmission resource, the remaining plurality of transmission resources, regardless of whether they are associated with any one of the M second downlink signals, can be used to perform the PRACH repetitions.

In a case where the terminal device performs the PRACH repetitions, the PRACH carries a first-type preamble. The description of the first-type preamble is the same as that in the above embodiment and will not be repeated. In this manner, regardless of whether the M second downlink signals are indicated by the network device or determined by the terminal device, the manner in which the network device determines that the terminal device performs the PRACH repetitions, and determines the number of repetitions and the target transmission resources is the same as the precessing manner of the network device in a case where the second parameter is no less than 1 and the plurality of target transmission resources are a plurality of transmission resources that are continuous in one or more mapping cycles, which are not repeated here. Similarly, after determining the target transmission resources, the network device may perform demodulation processing based on the repetitive PRACHs received on the target transmission resources. The specific processing manner is not limited in this embodiment.

Optionally, the plurality of target transmission resources include one or more first available transmission resources associated with each second downlink signal of the M second downlink signals in each mapping cycle of one or more mapping cycles. In this case, the starting target transmission resource of the plurality of target transmission resources is the first first available transmission resource associated with the first second downlink signal of the M second downlink signals in the first mapping cycle. The manner for determining one or more first available transmission resources associated with each second downlink signal of the M second downlink signals in each mapping cycle has been described in detail in the above embodiments and will not be repeated here.

In a case where the terminal device performs the PRACH repetitions, the PRACH carries the first-type preamble. The description of the first-type preamble is the same as that in the above embodiment and will not be repeated herein. In this implementation, regardless of whether the M second downlink signals are indicated by the network device or determined by the terminal device, the manner in which the network device determines that the terminal device performs the PRACH repetitions may be the same as that in the above embodiment and will not be repeated here.

After determineing that the terminal device performs the PRACH repetitions, the network device may further determine the number of the PRACH repetitions and the target transmission resources. In a case where the M second downlink signals are instructed by the network device, the network device determines the number of the PRACH repetitions and the target transmission resources in the same manner as the terminal device, and no repeated explanation is given. In a case where the M second downlink signals are instructed by the terminal device, the manner in which the network device determines the number of the PRACH repetitions is the same as the processing manner of the terminal device, and no repeated explanation is given.

There are several different manners in which the network device determines the target transmission resources, which are specifically as follows.

In one manner, the network device can use the transmission resource where the PRACH that is obtained by current parsing and carries the first-type preamble is located as the starting target transmission resource; based on a mapping relationship between each downlink signal and the transmission resource in one mapping cycle, determine the downlink signal associated with the starting target transmission resource.

Since M is known to the network device, in a case where M is equal to 1, the network device can determine unique one second downlink signal as long as it determines one downlink signal associated with the starting target transmission resource. Then, the network device may determine one or more first available transmission resources in each mapping cycle of one or more mapping cycles according to the number of the PRACH repetitions, and use the first available transmission resources as the target transmission resources. In this case, the manner for determining one or more first available transmission resources associated with the second downlink signal is the same as that in the above embodiment and will not be described repeatedly.

In a case where M is greater than 1, the network device may use one downlink signal associated with the determined starting target transmission resource as one of the M second downlink signals. The network device can then combine one downlink signal associated with the starting target transmission resource with signals on transmission resources associated with other possible downlink signals respectively, to obtain a analysis result of PRACH of each combination; determine one or more possible transmission resources based on the analysis result of the PRACH corresponding to each combination, and use the downlink signals associated with the one or more possible transmission resources as the remaining M-1 second downlink signals. After determining all M second downlink signals, the network device can determine one or more first available transmission resources in each mapping cycle of one or more mapping cycles in the same manner as the above embodiment. Finally, the network device can use one or more first available transmission resources in each mapping cycle of one or more mapping cycles as one or more target transmission resources.

In another manner, after receiving the contents corresponding to all transmission resources in one mapping cycle, the network device can analyze whether there is PRACH carrying the first-type preamble on each transmission resource. After determining one or more transmission resources occupied by the PRACH carrying the first-type preamble in one mapping cycle, the network device determines the downlink signal associated with each transmission resource occupied by the PRACH carrying the first-type preamble based on the mapping relationship, and uses the downlink signal associated with each transmission resource occupied by the PRACH carrying the first-type preamble as the M second downlink signals. After determining all M second downlink signals, the network device can determine one or more first available transmission resources in each mapping cycle of one or more mapping cycles in the same manner as the above embodiment. Finally, the network device can use one or more first available transmission resources in each mapping cycle of one or more mapping cycles as one or more target transmission resources.

Similarly, after determining the target transmission resources, the network device may perform demodulation processing based on the repetitive PRACHs received on the target transmission resources. The specific processing manner is not limited in this embodiment.

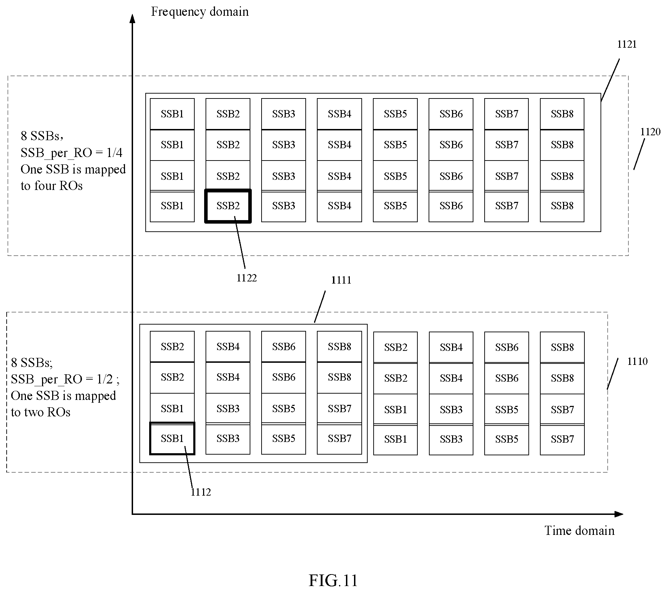

The above implementation provides a detailed description for the manner for determining the number of the PRACH repetitions and the plurality of target transmission resources in a case where the second parameter is less than 1 and the network device does not configure the first parameter (i.e., the parameter used to determine the number of the PRACH repetitions) for the terminal device. For example, in conjunction with FIG. 11 to FIG. 14, a description is given below for an example in which the downlink signal is SSB and the second parameter is SSB_per_RO.

For example, a manner for determining the starting target transmission resource of the target transmission resources is described with reference to part 1110 of FIG. 11. There are 8 SSBs in total, SSB_per_RO = 1/2, and one RO can map 1/2 SSB, that is, 1 SSB is mapped to 2 ROs. Assuming that the M second SSBs include SSB 1 and SSB2 and the terminal device uses all the transmission resources associated with the SSBs as available transmission resources, one or more first available transmission resources associated with SSB 1 are the 1^{st} RO and the 2nd RO in the mapping cycle, and one or more first available transmission resources associated with SSB 2 are the 3^{rd} RO and the 4th RO in the mapping cycle. The first available RO associated with SSB 1 is RO 1112 of the first mapping cycle 1111, and the RO 1112 is used as the starting target transmission resource of the plurality of target transmission resources. Taking part 1120 of FIG. 11 as an example, there are 8 SSBs in total, SSB_per_RO = 1/4, and one RO can map 1/4 SSB, that is, 1 SSB is mapped to 4 ROs. Assuming that the M second SSBs include SSB 2 and SSB 4, the plurality of available transmission resources associated with SSB 2 are the 5^{th} RO to the 8th RO in one mapping cycle, i.e., the 4 ROs after the 4 ROs associated with SSB 1. The first available RO associated with SSB 2 is RO 1122 of the first mapping cycle 1121, and the RO 1112 is used as the starting target transmission resource of the plurality of target transmission resources. Here, ROs in one mapping cycle are arranged from low frequency to high frequency in the frequency domain and in chronological order in the time domain, that is, the ROs are arranged from low to high in the frequency domain at the earliest time domain position, and then the ROs are arranged from low to high in the frequency domain at the next time domain position, and so on, which will not be exhaustive.

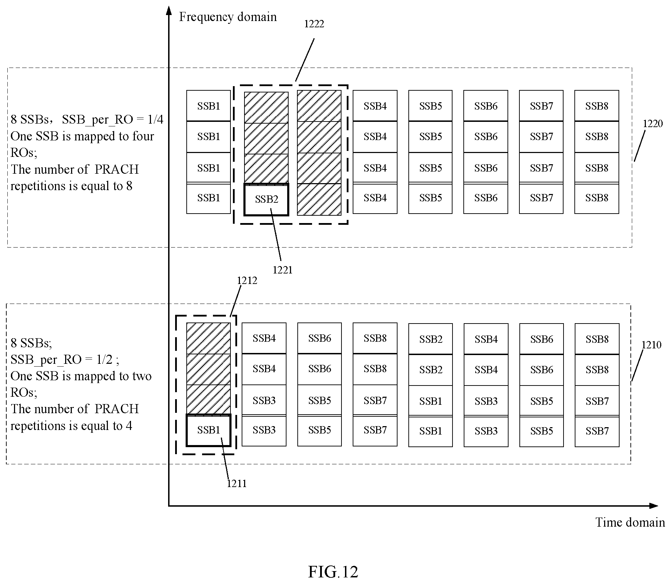

In conjunction with FIG. 12, a description is given for an example in which the plurality of target transmission resources include a plurality of transmission resources that are continuous in one or more mapping cycles. Take part 1210 of FIG. 12 as an example, SSB_per_ RO = 1/2, one mapping cycle includes 16 ROs, the number of the PRACH repetitions is equal to 4. Assuming that the M second SSBs include SSB 1 and SSB 2, the starting target RO of the plurality of target ROs can be the first available RO associated with SSB 1, i.e., RO 1211 in FIG. 12. The plurality of target ROs 1212 include, within the first mapping cycle, the starting target RO and the three continuous ROs thereafter. Taking part 1220 of FIG. 12 as an example, SSB_per_RO = 1/4, 32 ROs are included in one mapping cycle, the number of the PRACH repetitions is equal to 8. Assuming that the M second SSBs include SSB 2 and SSB 4, the starting target RO of the plurality of target ROs can be the first available RO associated with SSB 2, i.e., RO 1221 in FIG. 12. The plurality of target ROs 1222 include, within the first mapping cycle, the starting target RO and the 7 continuous ROs thereafter. The above descriptions are merely illustrative and all possible situations are not exhaustive.

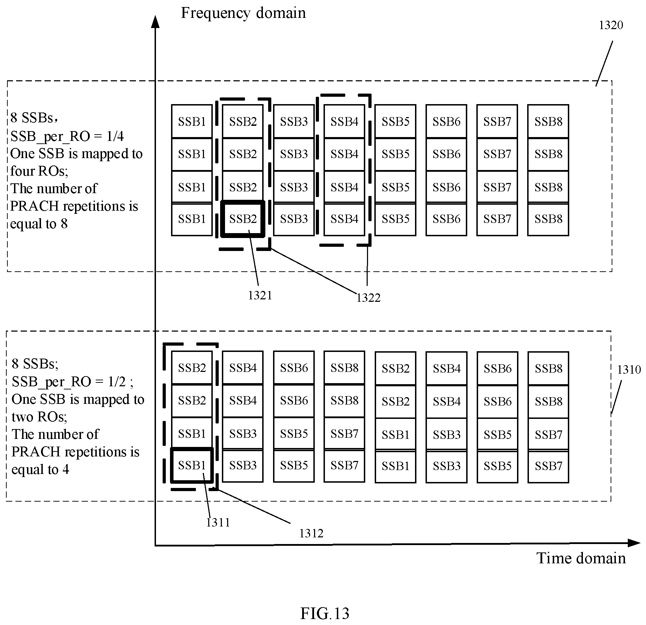

In conjunction with FIG. 13, a description is given for an example in which the plurality of target transmission resources are included one or more first available transmission resources associated with each second downlink signal of the M second downlink signals in each mapping cycle of one or more mapping cycles. Taking part 1310 of FIG. 13 as an example, SSB_per_RO = 1/2, a mapping cycle includes 16 ROs, the number of the PRACH repetitions is equal to 4, and the M second SSBs include SSB 1 and SSB 2. The first available transmission resources associated with SSB 1 are the 1st RO and the 2nd RO in one mapping cycle. The first available transmission resources associated with SSB 2 are the 3rd RO to the 4th RO in one mapping cycle. The starting target RO of the plurality of target ROs can be the first available RO associated with SSB 1, i.e., RO 1311 in FIG. 13. The plurality of target ROs 1312 includes the 1st RO to the 4th RO in the first mapping cycle. Taking part 1320 of FIG. 13 as an example, SSB_per_RO = 1/4, one mapping cycle includes 32 ROs, the number of the PRACH repetitions is equal to 8. Assuming that the M second SSBs include SSB 2 and SSB 4, the first available transmission resources associated with SSB 2 are the 5th RO to the 8th RO in one mapping cycle; and the first available transmission resources associated with SSB 4 are the 13th RO to the 16th RO in one mapping cycle. The starting target RO of the plurality of target ROs is the 5th RO 1321 in the first mapping cycle, and the plurality of target ROs 1322 include the 5th RO to the 8th RO and the 13th RO to the 16th RO in the first mapping cycle.

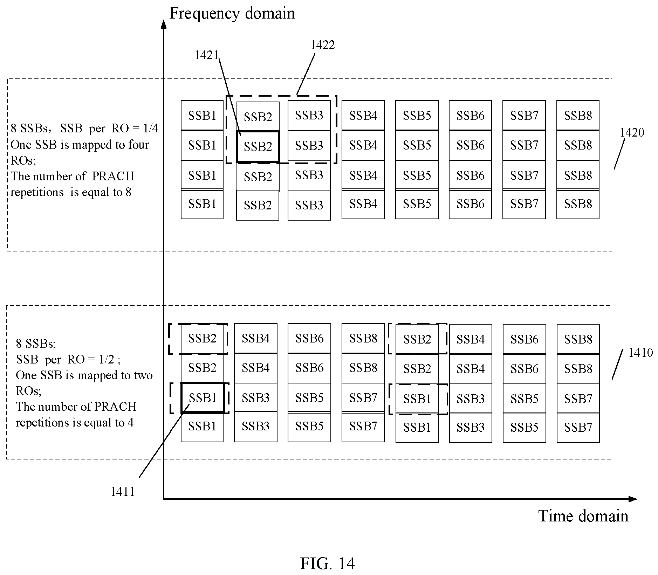

In conjunction with FIG. 14, a description is given for an example in which the plurality of target transmission resources are included on one or more first available transmission resources associated with each second downlink signal of the M second downlink signals in each mapping cycle of one or more mapping cycles. Assuming that the starting transmission resource is the designated transmission resource. Taking part 1410 of FIG. 14 as an example, SSB_per_RO = 1/2, 16 ROs are included in one mapping cycle, the number of the PRACH repetitions is equal to 4, and the M second SSBs include SSB 1 and SSB 2. The designated transmission resource of SSB 1 is the second RO, the starting target RO of the plurality of target ROs can be the second RO associated with SSB 1 in the first mapping cycle, i.e., RO 1411 in FIG. 14. The plurality of target ROs include those in the dotted box in part 1410 of FIG. 14: the starting target RO and the second RO associated with SSB 2 in the first mapping cycle, and the second RO associated with SSB 1 and the second RO associated with SSB 2 in the second mapping cycle.

Taking part 1420 of FIG. 14 as an example, SSB_per_RO = 1/4, 32 ROs are included in one mapping cycle, the number of the PRACH repetitions is equal to 4, and the M second SSBs include SSB 2 and SSB 3. The designated transmission resource is the third RO of each SSB, and of the one or more first available transmission resources associated with each second downlink signal, its designated transmission resource is the starting available transmission resource and its associated last transmission resource is the ending available transmission resource. The starting target RO of the plurality of target ROs can be the third available RO 1421 associated with SSB 2 in the first mapping cycle; the plurality of target ROs 1422 include the starting target RO, the fourth RO associated with SSB 2, and the third RO and the fourth RO associated with SSB3 in the first mapping cycle. The above descriptions are merely illustrative and all possible situations are not exhaustive.

In a possible implementation, the number of the PRACH repetitions may be determined according to information configured by the network device.

In this manner, the value indicated by the network device may be used to determine the number of the PRACH repetitions. In this case, the network device may carry the fifth value in the first parameter in the second information. Alternatively, the network device may indicate through other information. Exemplarily, the processing method of the network device further includes: sending, by the network device, third information. The third information carries the fifth value, and the fifth value is used to determine the number of the PRACH repetitions. The processing method of the terminal device further includes: receiving, by the terminal device, the third information. The third information carries the fifth value, and the fifth value is used to determine the number of the PRACH repetitions.

In some possible implementations, the terminal device may directly use the fifth value as the number of the PRACH repetitions, that is, the number of the PRACH repetitions is equal to the fifth value. In this case, the network device directly indicates the number of the PRACH repetitions on the terminal device side.

Under this implementation, if the second parameter is no less than 1, that is, one or more second downlink signals of the M second downlink signals are associated with the same transmission resource, the starting target transmission resource of the plurality of target transmission resources can be the first second available transmission resource in the first mapping cycle.

Furthermore, the plurality of target transmission resources may include the starting target transmission resource and a plurality of continuous transmission resources thereafter. In this case, regardless of whether the plurality of continuous transmission resources after the starting target transmission resource are associated with the M second downlink signals, they all can be used as target transmission resources. Alternatively, the plurality of target transmission resources may include one or more second available transmission resources in each mapping cycle of one or more mapping cycles. The manner for determining one or more second available transmission resources in one mapping cycle has been described in detail in the above embodiment and will not be repeated here.

If the second parameter is less than 1, that is, different second downlink signals among the M second downlink signals are associated with different transmission resources, and each second downlink signal is associated with a plurality of transmission resources. The starting target transmission resource of the plurality of target transmission resources may be the first first available transmission resource associated with the first second downlink signal of the M second downlink signals in the first mapping cycle. Regarding this situation, the manner for determining the first first available transmission resource associated with the first second downlink signal of the M second downlink signals in the first mapping cycle is the same as that in the above embodiment and will not be repeated herein.

Furthermore, the plurality of target transmission resources may include the starting target transmission resource and a plurality of continuous transmission resources thereafter. In this case, regardless of whether the plurality of continuous transmission resources after the starting target transmission resource are associated with the M second downlink signals, they all can be used as target transmission resources. Alternatively, the plurality of target transmission resources include one or more first available transmission resources associated with each second downlink signal of the M second downlink signals in each mapping cycle of one or more mapping cycles. The manner for determining one or more first available transmission resources associated with each second downlink signal has been described in the above embodiment and will not be repeated here.

In this implementation, if the plurality of target transmission resources include one or more first available transmission resources associated with each second downlink signal of the M second downlink signals in each mapping cycle of one or more mapping cycles, the number of first available transmission resources associated with each second downlink signal may be equal to the fifth value divided by M. That is, the number of first available transmission resources associated with each second downlink signal may be the same. Therefore, the first available transmission resource associated with each second downlink signal is preferably determined according to a subset of transmission resources or a designated transmission resource for each second downlink signal. Alternatively, the number of first available transmission resources for each second downlink signal may not be limited to be the same, and the fifth value is used to represent a sum of the number of first available transmission resources respectively associated with all the M second downlink signals.

In this implementation, the example descriptions of various target transmission resources are similar to those in the above embodiments, which will not be repeated.

Optionally, in a case where the terminal device performs the PRACH repetitions, the PRACH carries a first-type preamble; and the first-type preamble is the same as that of the above embodiment. The manner in which the network device determines whether the terminal device performs the PRACH repetitions and the target transmission resources in different situations are the same as those in the above implementation and will not be described repeatedly.

In some possible implementations, the number of the PRACH repetitions is equal to a product of the fifth value and the sixth value.

In a possible implementation, the sixth value is configured by the network device, or is preset, or is related to a second parameter. The second parameter is used to represent the number of downlink signals associated with one transmission resource.

Optionally, the sixth value is configured by the network device or preset, and the sixth value can simply be understood as multiple used in calculation. That is, after the network device configures the fifth value, the terminal device can use a multiple pre-configured by the network device or preset by itself multiplied by the fifth value to obtain resources of the PRACH repetition. In this case, the manner for determining the starting target transmission resource of the target transmission resources and the manner for determining the target transmission resources are similar to the plurality of implementations in which the second parameter is less than 1 or not greater than 1 in a case where only the fifth value is used. It is only necessary to replace the fifth value in the above implementations with the product of the fifth value and the sixth value, and no repeated explanation is given here.

Optionally, in a case where the sixth value is related to the second parameter, the sixth value is equal to one of: the first preset value in a case where the second parameter is no less than 1; the second parameter in a case where the second parameter is no less than 1. Here, the relevant description of the first preset value is the same as that in the above embodiment and will not be repeated herein. The several possible values of the sixth value can also be understood as follows. The terminal device can select different multiples to calculate the number of the PRACH repetitions. In a case where the second parameter is no less than 1, one or more second downlink signals are associated with the same second available transmission resource. The manner for determining the starting target transmission resource of the target transmission resources and the manner for determining the target transmission resources are similar to the plurality of implementations in which the second parameter is not greater than 1 in a case where only the fifth value is used. It is only necessary to replace the fifth value in the above implementations with the product of the fifth value and the sixth value, and no repeated explanation is given here.

Optionally, in a case where the sixth value is related to the second parameter, the sixth value is equal to one of: M multiplied by a second preset value in a case where the second parameter is less than 1, M being the number of second downlink signals and M being a positive integer; M multiplied by a reciprocal of the second parameter in a case where the second parameter is less than 1; M in a case where the second parameter is less than 1. Here, the relevant description of the second preset value is the same as that in the above embodiment and will not be repeated. The several possible values of the sixth value can also be understood as follows. The terminal device can select different multiples to calculate the number of the PRACH repetitions.

In a case where the sixth value is equal to M, M can be used as a multiple of the fifth value, which does not mean that the number of first available transmission resources associated with each second downlink signal must be controlled to be the fifth value; or, the sixth value can be understood as the number of second downlink signals, and the corresponding fifth value represents the number of first available transmission resources associated with each second downlink signal.

Further, in a case where the sixth value is equal to M, if the terminal device itself determines the first available transmission resources for each second downlink signal, the fifth value of available transmission resources can be arbitrarily selected from the plurality of transmission resources associated with each second downlink signal as the first available transmission resources associated with the second downlink signal; or, the fifth value of available transmission resources with the smallest index numbers can be selected from the plurality of transmission resources associated with each second downlink signal as the first available transmission resources associated with the second downlink signal. In this case, if the network device configures or indicates the first available transmission resources for each second downlink signal for the terminal device, the network device may indicate or configure the fifth value of the first available transmission resources associated with each second downlink signal for the terminal device.

In a case where the second parameter is less than 1, one or more second downlink signals are associated with the same second available transmission resource. The manner for determining the starting target transmission resource of the target transmission resources and the manner for determining the target transmission resources are similar to the various manners in which the second parameter is greater than 1 in a case where only the fifth value is used. It is only necessary to replace the fifth value in the above manners with a product of the fifth value and the sixth value, and no repeated explanation is given here.

Optionally, in a case where the terminal device performs the PRACH repetitions, the PRACH carries a first-type preamble; and the first-type preamble is the same as that of the above embodiment. The manner in which the network device determines whether the terminal device performs the PRACH repetitions and the manner for determining the target transmission resources in different situations are the same as those in the above implementation and will not be described repeatedly. The manner in which the network device determines the number of the PRACH repetitions is the same as that described above in this embodiment, and therefore will not be described again.

In a possible implementation, in a case where the sixth value is related to the second parameter, the fifth value is the number of mapping cycles occupied by the PRACH repetitions. The second parameter is used to represent the number of downlink signals associated with one transmission resource.

In this implementation, it is equivalent that the network device indicate that the terminal device performs the PRACH repetitions in the fifth value of mapping cycle. The terminal device itself determines the number of first available transmission resources or the number of second available transmission resources used in each mapping cycle as the sixth value. The sixth value is multiplied by the fifth value to obtain the total number of the PRACH repetitions in the fifth value of mapping cycles.

Optionally, in a case where the second parameter is less than 1, the sixth value is equal to a sum of the number of one or more first available transmission resources respectively associated with M second downlink signals in one mapping cycle. Based on the processing of this embodiment, the plurality of target transmission resources include one or more first available transmission resources associated with each second downlink signal of the M second downlink signals in each mapping cycle of the fifth value of mapping cycles. That is, the number of mapping cycles is the specified fifth value. Here, the manner for determining one or more first available transmission resources associated with each second downlink signal has been described in detail in the above embodiment and will not be repeated here. The manner for determining the starting target transmission resource of the target transmission resources is the same as that of other implementations in a case where the second parameter is less than 1, which is thus not be repeated.

Optionally, in a case where the second parameter is no less than 1, the sixth value is equal to the number of one or more second available transmission resources in one mapping cycle. Each of the one or more second available transmission resources is associated with one or more second downlink signals of the M second downlink signals. Based on the processing of this embodiment, the plurality of target transmission resources include one or more second available transmission resources in each mapping cycle of the fifth value of mapping cycles. That is, the number of mapping cycles is the specified fifth value. Here, the manner for determining each second available transmission resource has been described in detail in the above embodiment and will not be repeated here. The manner for determining the starting target transmission resource of the target transmission resources is the same as that of other implementations in a case where the second parameter is no less than 1, which is thus not be repeated.

Optionally, in a case where the terminal device performs the PRACH repetitions, the PRACH carries a first-type preamble; and the first-type preamble is the same as that of the above embodiment. The manner in which the network device determines whether the terminal device performs the PRACH repetitions and the target transmission resources in different situations is the same as those in the above implementations and will not be described repeatedly. The manner in which the network device determines the number of the PRACH repetitions is the same as that described above in this embodiment, and therefore will not be described again. It should be noted that, in this implementation, the fifth value configured by the network device is the specified number of mapping cycles. Therefore, after determining the target transmission resources in one mapping cycle, the network device processes, such as receives and parses, the PRACH on the target transmission resources in each mapping cycle within only the fifth value of mapping cycles.

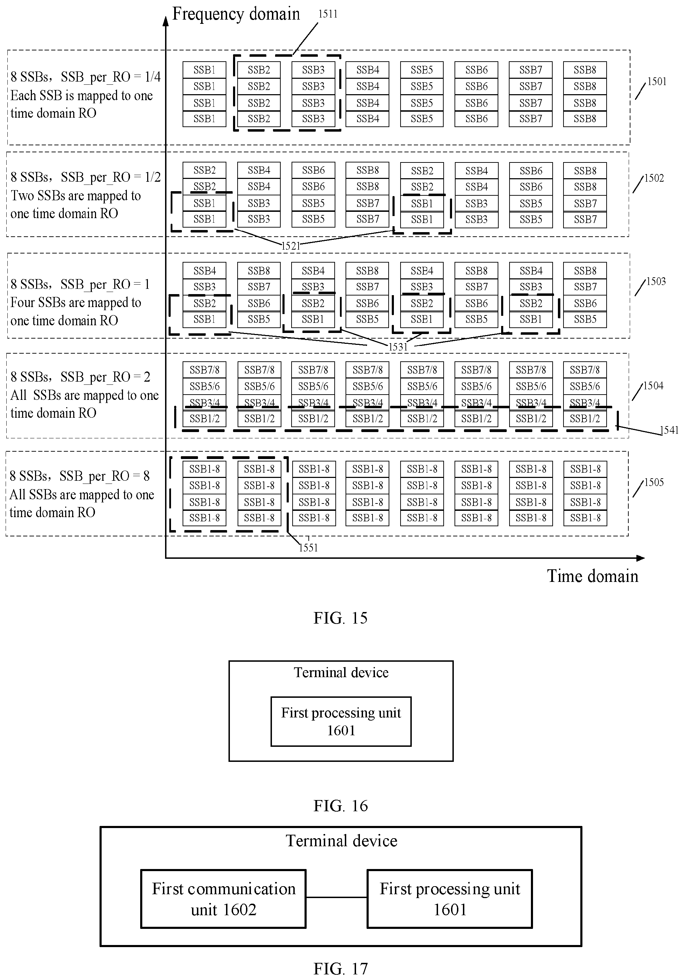

The fifth value in this embodiment is used as the number of mapping cycles. A description is given for an example in which the downlink signal is SSB and the second parameter is SSB_per_RO. In conjunction with part 1501 of FIG. 15, SSB_per_ RO =1/4, one mapping cycle includes 32 ROs, the fifth value is equal to 1, and the M second SSBs include SSB 2 and SSB 3. One or more first available transmission resources associated with each second downlink signal (i.e., SSB 2 or SSB 3) are all available transmission resources, the number of first available transmission resources associated with each SSB is 4, and the sum of the number of first available transmission resources associated with SSB 2 and SSB 3 in each mapping cycle is 8. The number of the PRACH repetitions is equal to 8. The starting target RO of the plurality of target ROs can be the first available RO associated with SSB2 in the first mapping cycle. The plurality of target ROs 1511 include the fourth ROs associated with SSB 2, and the four ROs associated with SSB3 in the first mapping cycle. The above descriptions are merely illustrative and all possible situations are not exhaustive.

Taking part 1502 of FIG. 15 as an example, SSB_per_RO = 1/2, one mapping cycle includes 16 ROs, the fifth value is equal to 2, and the M second SSBs include SSB 1. The number of first available transmission resources associated with each second downlink signal is 2, and the number of the PRACH repetitions is 2 times 2, which is equal to 4. The starting target RO of the plurality of target ROs can be the first RO associated with SSB 1 in the first mapping cycle. The plurality of target ROs include those in the dotted box in part 1521 of FIG. 15: 2 ROs associated with SSB 1 in the first mapping cycle, and 2 ROs associated with SSB 1 in the second mapping cycle.

Taking part 1503 of FIG. 15 as an example, SSB_per_RO =1, one mapping cycle includes 8 ROs, the fifth value is equal to 4, and the M second SSBs include SSB 1 and SSB 2. Each second downlink signal is associated with one second available transmission resource, and the number of the PRACH repetitions is 2 times 4, which is equal to 8. The starting target RO of the plurality of target ROs can be the first RO in the first mapping cycle. The plurality of target ROs include those in the dotted box in part 1531 of FIG. 15: one RO associated with SSB 1 and SSB 2 respectively in the 1st mapping cycle to the 4th mapping cycle.

Taking part 1504 of FIG. 15 as an example, SSB_per_RO = 2, one mapping cycle includes 4 ROs, the fifth value is equal to 8, and the M second SSBs include SSB 1 and SSB2. Two second downlink signals are associated with one second available transmission resource, that is, each mapping cycle includes one second available transmission resource therein. The number of the PRACH repetitions is 8 times 1, which is equal to 8. The starting target RO of the plurality of target ROs can be the first RO in the first mapping cycle. The plurality of target ROs include those in the dotted box in part 1541 of FIG. 15: first ROs in the 1st mapping cycle to the 8th mapping cycle.

Taking part 1505 of FIG. 15 as an example, SSB_per_RO =8, one mapping cycle includes one RO, the fifth value is equal to 8, and the M second SSBs include SSB 1, SSB 2 and SSB3. The three second downlink signals are associated with the same second available transmission resource, that is, each mapping cycle includes one second available transmission resource therein. The number of the PRACH repetitions is 8 times 1, which is equal to 8. The starting target RO of the plurality of target ROs can be the first RO in the first mapping cycle. The plurality of target ROs include that in the dotted box in part 1551 of FIG. 15: 1 RO in the 1st mapping cycle to the 8th mapping cycle.

In the above various implementations, detailed descriptions are given on how to determine the number of the PRACH repetitions and the plurality of target transmission resources in different situations.

Finally, it should be noted that the PRACH repetitions involved in all the above schemes of this embodiment can be used for four-step random access (such as msg 1 therein) or for two-step random access (such as msg A therein), which are within the protection scope of this embodiment.

It can be seen that through the above solution, the terminal device can determine whether to perform the PRACH repetitions based on a result obtained by its own processing. In this way, the terminal device can add the function of enabling PRACH repetitions, and then perform the PRACH repetitions when needed. In a case where the PRACH repetitions are performed, the coverage of PRACH can be enhanced, thereby the transmission performance of PRACH is enhanced.

FIG. 16 is a schematic block diagram of a terminal device, in accordance with an embodiment of the present application. The terminal device may include:
a first processing unit 1601 used to determine whether to perform physical random access channel (PRACH) repetitions based on first information. The first information is obtained by processing by the terminal device.

The first processing unit, in a case of determining to perform the PRACH repetitions, is used to perform the PRACH repetitions on a plurality of target transmission resources. A number of the plurality of target transmission resources is the same as a number of the PRACH repetitions, and each target transmission resource of the plurality of target transmission resources is used to perform one PRACH transmission.

In a case where the first information meets a first condition, the first processing unit is used to determine to perform the PRACH repetitions.

The first information comprises a transmission result of a previous PRACH transmission; and in a case where the transmission result of the previous PRACH transmission is transmission failure, the first processing unit is used to determine that the first condition is met.

The first processing unit is used to perform one of: determining, in a case where the previous PRACH transmission is performed and no random access response (RAR) is received, that the transmission result of the previous PRACH transmission is transmission failure; determining, in a case where the previous PRACH transmission is performed and no conflict resolution message is received, that the transmission result of the previous PRACH transmission is transmission failure.

The first information comprises a measurement result of a first downlink signal; and in a case where the measurement result of the first downlink signal is less than a first threshold value, the first processing unit is used to determine that the first condition is met.

The first threshold value is preset, or determined by the terminal device, or configured by a network device.

The first threshold value, in a case of being configured by the network device, is carried by one of: a feature combination preamble, a random access channel (RACH) common configuration parameter, a common configuration parameter of a message (msg) A, a beam failure recovery configuration, or a msg A configuration parameter in the RACH common configuration parameter.

The first threshold value, in a case of being determined by the terminal device, is determined based on a second threshold value; and the second threshold value is configured by the network device.

Based on FIG. 16, as shown in FIG. 17, the terminal device further comprises a first communication unit 1602. The first communication unit is used to receive second information; and the second information is used by the terminal device to determine whether to perform the PRACH repetitions.

The first processing unit is used to determine to perform PRACH repetitions in a case where the first information meets the first condition and the second information comprises first indication information and the first indication information is used to indicate initiation of the PRACH repetitions.

A value of the first indication information, in a case of being a first value, is used to indicate the initiation of the PRACH repetitions; or a transmission type of PRACH comprised in the first indication information, in a case of being a repetition type, is used to indicate the initiation of the PRACH repetitions.

In a case where the second information comprises a first threshold value and the first information meets the first condition, the first processing unit is used to determine to perform the PRACH repetitions. The first threshold value is a threshold value related to a measurement result of a downlink signal.

In a case where the first information meets the first condition and a value of a first parameter indicated by the second information is a valid value, the first processing unit is used to determine to perform the PRACH repetitions. The value of the first parameter is used to determine the number of the PRACH repetitions.

The number of the PRACH repetitions is related to a second parameter. The second parameter is used to indicate a number of downlink signals associated with one transmission resource.

In a case where the second parameter is no less than 1, the number of the PRACH repetitions is equal to one of: a first value, the first value being equal to M multiplied by the second parameter, and M being a number of second downlink signals, and M being a positive integer; or a second value, the second value being equal to M multiplied by a first preset value.

In a case where the second parameter is less than 1, the number of the PRACH repetitions is equal to one of: a third value, the third value being a sum of a number of one or more first available transmission resources respectively associated with M second downlink signals in one mapping cycle, and M being a positive integer; or a fourth value, the fourth value being equal to M multiplied by a second preset value.

The number of the PRACH repetitions is equal to a minimum value of the third value and the fourth value.

The first communication unit is used to receive third information, the third information carries a fifth value, and the fifth value is used to determine the number of the PRACH repetitions.

The value of the first parameter comprises a fifth value, and the fifth value is used to determine the number of the PRACH repetitions.

The number of the PRACH repetitions is equal to the fifth value.

The number of the PRACH repetitions is equal to a product of the fifth value and a sixth value.

The sixth value is configured by a network device or preset.

The sixth value is related to a second parameter. The second parameter is used to indicate a number of downlink signals associated with one transmission resource.

The sixth value is equal to one of: a first preset value in a case where the second parameter is no less than 1; or the second parameter in a case where the second parameter is no less than 1.

The sixth value is related to a second parameter. The second parameter is used to indicate a number of downlink signals associated with one transmission resource; and the sixth value is equal to one of: M multiplied by a second preset value in a case where the second parameter is less than 1, M being a number of second downlink signals, and M being a positive integer; M multiplied by a reciprocal of the second parameter in a case where the second parameter is less than 1; or M in a case where the second parameter is less than 1.

The sixth value is related to a second parameter. The second parameter is used to represent a number of downlink signals associated with one transmission resource; and the fifth value is a number of mapping cycles occupied by the PRACH repetitions.

In a case where the second parameter is less than 1, the sixth value is equal to a sum of a number of one or more first available transmission resources respectively associated with M second downlink signals in one mapping cycle.

In a case where the second parameter is no less than 1, the sixth value is equal to a number of one or more second available transmission resources in one mapping cycle; and each second available transmission resource of the one or more second available transmission resources is associated with one or more second downlink signals of M second downlink signals.

The plurality of target transmission resources comprise: a plurality of transmission resources that are continuous in one or more mapping cycles.

The plurality of target transmission resources comprise one or more first available transmission resources associated with each second downlink signal of M second downlink signals in each mapping cycle of one or more mapping cycles.

The plurality of target transmission resources comprise one or more second available transmission resources in each mapping cycle of one or more mapping cycles; and each second available transmission resource of the one or more second available transmission resources is associated with one or more second downlink signals of M second downlink signals.

The plurality of target transmission resources comprise one or more first available transmission resources associated with each second downlink signal of M second downlink signals in each mapping cycle of the fifth value of mapping cycles.

The plurality of target transmission resources comprise one or more second available transmission resources in each mapping cycle of the fifth value of mapping cycles.

A starting target transmission resource of the plurality of target transmission resources is a first first available transmission resource associated with a first second downlink signal of the M second downlink signals in a first mapping cycle.

The first first available transmission resource associated with the first second downlink signal of the M second downlink signals in the first mapping cycle is one of: a first available transmission resource associated with the first second downlink signal of the M second downlink signals in the first mapping cycle; a first available transmission resource in a subset of transmission resources associated with the first second downlink signal of the M second downlink signals in the first mapping cycle; or a designated transmission resource associated with the first second downlink signal of the M second downlink signals in the first mapping cycle.

A starting target transmission resource of the plurality of target transmission resources is a first second available transmission resource in a first mapping cycle.

In a case where the second parameter is less than 1, one or more first available transmission resources associated with each second downlink signal of the M second downlink signals in one mapping cycle comprise one of: one or more available transmission resources associated with each second downlink signal of the M second downlink signals in the one mapping cycle; designated transmission resources associated with each second downlink signal of the M second downlink signals in the one mapping cycle; available transmission resources in a subset of transmission resources associated with each second downlink signal of the M second downlink signals in the one mapping cycle; or available transmission resources between a starting available transmission resource and an ending available transmission resource associated with each second downlink signal of the M second downlink signals in the one mapping cycle. The starting available transmission resource and/or the ending available transmission resource associated with each second downlink signal are a designated transmission resource associated with each second downlink signal.

The first communication unit is used to receive fourth information. In a case where the second parameter is less than 1, the fourth information is used to determine one or more available transmission resources associated with each second downlink signal of the M second downlink signals in one mapping cycle.

The fourth information comprises a bit map; and the bit map is used to indicate one or more available transmission resources associated with each second downlink signal of the M second downlink signals in one mapping cycle.

A value of the fourth information, in a case of being in a first value range, is used to determine a subset of transmission resources associated with each second downlink signal of the M second downlink signals in the one mapping cycle; and/or the value of the fourth information, in a case of being in a second value range, is used to determine designated transmission resources associated with each second downlink signal of the M second downlink signals in the one mapping cycle.

The one or more second available transmission resources in the one mapping cycle comprise one available transmission resource associated with each second downlink signal of the M second downlink signals in the one mapping cycle. The one available transmission resource associated with each second downlink signal is determined based on the second parameter in a case where the second parameter is no less than 1.

The mapping cycle comprises transmission resources to which a plurality of downlink signals are mapped; and the plurality of downlink signals comprise the M second downlink signals.

The M second downlink signals are downlink signals used by the terminal device.

The M second downlink signals are indicated by fifth information.

The first processing unit is used to select the M second downlink signals from the plurality of downlink signals based on measurement results respectively corresponding to a plurality of downlink signals. M is configured by the network device or preset.

The first processing unit is used to perform one of: selecting M second downlink signals with the largest measurement results from the plurality of downlink signals; in a case where a measurement result of a downlink signal among the plurality of downlink signals is greater than a first threshold value, determining the M second downlink signals based on the downlink signal whose measurement result is greater than the first threshold value.

The downlink signal comprises a synchronization signal block (SSB), or a channel state information reference signal (CSI-RS).

A transmission resource is a PRACH occasion.

In a case where the PRACH repetitions are performed, PRACH is used to carry a first-type preamble; the first-type preamble is a preamble used for the PRACH repetitions; and the first-type preamble is preset or configured by a network device.

The terminal device in the embodiments of the present application can implement the functions corresponding to the terminal device in the above method embodiments. The processes, functions, implementations and beneficial effects corresponding to various modules (sub-modules, units or components, etc.) in the terminal device can be found in the corresponding description in the above method embodiments, and will not be repeated here. It should be noted that the described functions of the various modules (sub-modules, units or components, etc.) in the terminal device of the embodiments of the application can be implemented by different modules (sub-modules, units or components, etc.) or by the same module (sub-module, unit or component, etc.).

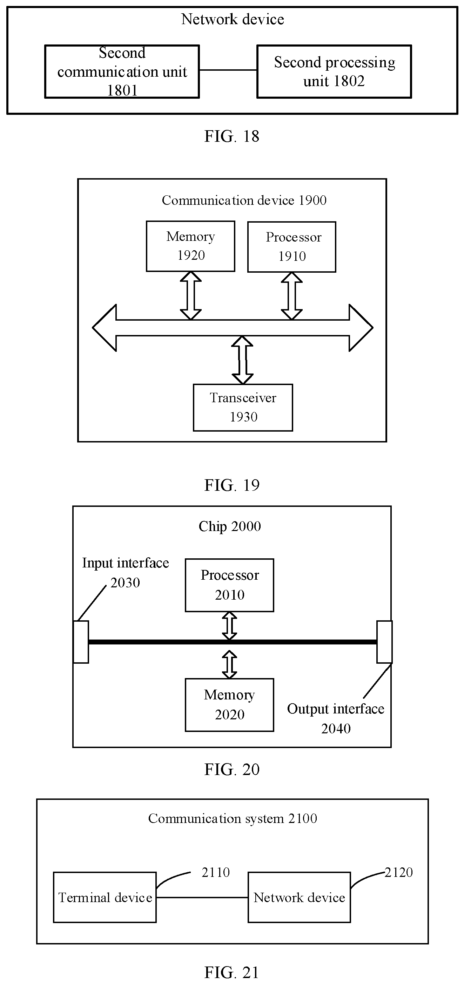

FIG. 18 is a schematic block diagram of a network device, in accordance with an embodiment of the present application. The network equipment may include:
a second communication unit 1801 used to receive physical random access channels (PRACHs). Whether to perform PRACH repetitions is determined by a terminal device based on first information, and the first information is obtained by processing by the terminal device.

The second communication unit is used to receive repetitive PRACHs on a plurality of target transmission resources. A number of the plurality of target transmission resources is the same as a number of PRACH repetitions, and each target transmission resource of the plurality of target transmission resources is used to receive one PRACH.

The network device further comprises a second processing unit 1802. The second processing unit is used to receive a PRACH sent by the terminal device, and parse a preamble carried by the PRACH; in a case where the preamble carried by the PRACH is a first-type preamble, the network device determines that the terminal device performs the PRACH repetitions, and the second communication unit receives the repetitive PRACHs by the terminal device on the plurality of target transmission resources. The first-type preamble is a preamble used by the terminal device when performing the PRACH repetitions; and the first-type preamble is preset, or is configured by the network device for the terminal device.

The second communication unit is used to configure a first threshold value for the terminal device through one of: a feature combination preamble, a random access channel (RACH) common configuration parameter, a common configuration parameter of a message (msg) A, a beam failure recovery configuration, a msg A specific configuration parameter in the RACH common configuration parameter. The first threshold value is a threshold value related to a measurement result of a downlink signal.

The second communication unit is used to configure a second threshold value for the terminal device, and the second threshold value is used by the terminal device to determine a first threshold value.

The second communication unit is used to send second information to the terminal device; and the second information is used by the terminal device to determine whether to perform the PRACH repetitions.

The second information comprises first indication information. A value of the first indication information, in a case of being a first value, is used to indicate initiation of the PRACH repetitions; or a transmission type of PRACH comprised in the first indication information, in a case of being a repetition type, is used to indicate the initiation of the PRACH repetitions.

The second information comprises a first threshold value; and the first threshold value is a threshold value related to a measurement result of a downlink signal.

The second information is used to indicate a value of a first parameter, and the value of the first parameter is used by the terminal device to determine the number of the PRACH repetitions.

The number of the PRACH repetitions is related to a second parameter. The second parameter is used to indicate a number of downlink signals associated with one transmission resource.

In a case where the second parameter is no less than 1, the number of the PRACH repetitions is equal to one of: a first value, the first value being equal to M multiplied by the second parameter, M being a number of second downlink signals, and M being a positive integer; or a second value, the second value being equal to M multiplied by a first preset value.

In a case where the second parameter is less than 1, the number of the PRACH repetitions is equal to one of: a third value, the third value being a sum of a number of one or more first available transmission resources respectively associated with M second downlink signals in one mapping cycle, and M being a positive integer; or a fourth value, the fourth value being equal to M multiplied by a second preset value.

The number of the PRACH repetitions is equal to a minimum value of the third value and the fourth value.

The second communication unit is used to send third information to the terminal device, the third information carries a fifth value, and the fifth value is used to determine the number of the PRACH repetitions.

The value of the first parameter comprises a fifth value, and the fifth value is used to determine the number of the PRACH repetitions.

The number of the PRACH repetitions is equal to the fifth value.

The number of the PRACH repetitions is equal to a product of the fifth value and a sixth value.

The sixth value is configured by the network device for the terminal device or preset.

The sixth value is related to a second parameter. The second parameter is used to indicate a number of downlink signals associated with one transmission resource; and the sixth value is equal to one of: a first preset value in a case where the second parameter is no less than 1; the second parameter in a case where the second parameter is no less than 1.

The sixth value is related to a second parameter. The second parameter is used to indicate a number of downlink signals associated with one transmission resource; and the sixth value is equal to one of: M multiplied by a second preset value in a case where the second parameter is less than 1, M being a number of second downlink signals, and M being a positive integer; M multiplied by a reciprocal of the second parameter in a case where the second parameter is less than 1; M in a case where the second parameter is less than 1.

The sixth value is related to a second parameter. The second parameter is used to represent a number of downlink signals associated with one transmission resource; and the fifth value is a number of mapping cycles occupied by the PRACH repetitions.

In a case where the second parameter is less than 1, the sixth value is equal to a sum of a number of one or more first available transmission resources respectively associated with M second downlink signals in one mapping cycle.

In a case where the second parameter is no less than 1, the sixth value is equal to a number of one or more second available transmission resources in one mapping cycle; and each second available transmission resource of the one or more second available transmission resources is associated with one or more second downlink signals of M second downlink signals.

The plurality of target transmission resources comprise a plurality of transmission resources that are continuous in one or more mapping cycles.

The plurality of target transmission resources comprise one or more first available transmission resources associated with each second downlink signal of M second downlink signals in each mapping cycle of one or more mapping cycles.

The plurality of target transmission resources comprise one or more second available transmission resources in each mapping cycle of one or more mapping cycles; and each second available transmission resource of the one or more second available transmission resources is associated with one or more second downlink signals of M second downlink signals.

The plurality of target transmission resources comprise one or more first available transmission resources associated with each second downlink signal of M second downlink signals in each mapping cycle of the fifth value of mapping cycles.

The plurality of target transmission resources comprise one or more second available transmission resources in each mapping cycle of the fifth value of mapping cycles.

A starting target transmission resource of the plurality of target transmission resources is a first first available transmission resource associated with a first second downlink signal of the M second downlink signals in a first mapping cycle. The first first available transmission resource associated with the first second downlink signal of the M second downlink signals in the first mapping cycle is one of: a first available transmission resource associated with the first second downlink signal of the M second downlink signals in the first mapping cycle; a first available transmission resource in a subset of transmission resources associated with the first second downlink signal of the M second downlink signals in the first mapping cycle; a designated transmission resource associated with the first second downlink signal of the M second downlink signals in the first mapping cycle.

A starting target transmission resource of the plurality of target transmission resources is a first second available transmission resource in a first mapping cycle.

The second communication unit is used to send fourth information to the terminal device; and the fourth information, in a case where the second parameter is less than 1, is used by the terminal device to determine one or more available transmission resources associated with each second downlink signal of the M second downlink signals in one mapping cycle.

The fourth information comprises a bit map; and the bit map is used to indicate one or more available transmission resources associated with each second downlink signal of the M second downlink signals in one mapping cycle.

A value of the fourth information, in a case where being within a first value range, is used by the terminal device to determine a subset of transmission resources associated with each second downlink signal of the M second downlink signals in the one mapping cycle; and/or the value of the fourth information, in a case of being within a second value range, is used by the terminal device to determine designated transmission resources associated with each second downlink signal of the M second downlink signals in the one mapping cycle.

The mapping cycle comprises transmission resources to which a plurality of downlink signals are mapped; and the plurality of downlink signals comprise the M second downlink signals.

The second communication unit is used to send fifth information to the terminal device, and the fifth information is used to indicate the M second downlink signals.

The downlink signal comprises a synchronization signal block (SSB), or a channel state information reference signal (CSI-RS).

A transmission resource is a PRACH occasion.

The network device in the embodiments of the present application can implement the functions corresponding to the network device in the above method embodiments. In addition to the second communication unit, the network device may further include a second processing unit. The second processing unit can be used to determine the number of the PRACH repetitions and the target transmission resources, etc., but they are not schematically illustrated in the figures. The processes, functions, implementations and beneficial effects corresponding to various modules (sub-modules, units or components, etc.) in the network device can be found in the corresponding description in the above method embodiments, and will not be repeated here. It should be noted that the described functions of the various modules (sub-modules, units or components, etc.) in the network device of the embodiments of the application can be implemented by different modules (sub-modules, units or components, etc.) or by the same module (sub-module, unit or component, etc.).

FIG. 19 is a schematic structural diagram of a communication device 1900, in accordance with an embodiment of the present application. The communication device 1900 includes a processor 1910, and the processor 1910 can call and run a computer program from a memory to cause the communication device 1900 to implement the methods in the embodiments of the present application.

In one implementation, the communication device 1900 may further include a memory 1920. The processor 1910 may call and run a computer program from the memory 1920 to cause the communication device 1900 to implement the methods in the embodiments of the present application. The memory 1920 may be a separate device independent of the processor 1910, or may be integrated into the processor 1910.

In one implementation, the communication device 1900 may further include a transceiver 1930, and the processor 1910 may control the transceiver 1930 to communicate with other devices. Specifically, the transceiver 1930 may send information or data to other devices, or receive information or data sent by other devices. The transceiver 1930 may include a transmitter and a receiver. The transceiver 1930 may further include antenna(s), and the number of the antennas may be one or more.

In one implementation, the communication device 1900 may be the terminal device of embodiments of the present application, and the communication device 1900 may implement the corresponding processes implemented by the terminal device in each method of the embodiments of the present application, which will not be described here for the sake of brevity.

In one implementation, the communication device 1900 may be the network device of embodiments of the present application, and the communication device 1900 may implement the corresponding processes implemented by the network device in each method of the embodiments of the present application, which will not be described in detail here for the sake of brevity.

FIG. 20 is a schematic structural diagram of a chip 2000, in accordance with an embodiment of the present application. The chip 2000 includes a processor 2010, which can call and run a computer program from a memory to implement the methods in the embodiments of the present application.

In one implementation, the chip 2000 may further include a memory 2020. The processor 2010 can call and run a computer program from the memory 2020 to implement the methods performed by the terminal device or the network device in the embodiments of the present application. The memory 2020 may be a separate device independent of the processor 2010, or may be integrated into the processor 2010.

In one implementation, the chip 2000 may further include an input interface 2030. The processor 2010 may control the input interface 2030 to communicate with other devices or chips. Specifically, the input interface 2030 may obtain information or data sent by other devices or chips.

In one implementation, the chip 2000 may further include an output interface 2040. The processor 2010 may control the output interface 2040 to communicate with other devices or chips. Specifically, the output interface 2040 may output information or data to other devices or chips.

In one implementation, the chip can be applied to the terminal device in the embodiments of the present application, and the chip can implement the corresponding processes implemented by the terminal device in the various methods of the embodiments of the present application, wheieh will not be repeated here for the sake of brevity.

In one implementation, the chip can be applied to the network device in the embodiments of the present application, and the chip can implement the corresponding processes implemented by the network device in the various method of the embodiments of the present application, wheieh will not be repeated here for the sake of brevity.

The chips used in the terminal device and the network device may be the same chip or different chips. It should be understood that the chip mentioned in the embodiments of the present application can also be called a system-level chip, a system chip, a chip system or a system-on-chip chip, etc.

The processor mentioned above can be a general-purpose processor, a digital signal processor (DSP), a field programmable gate array (FPGA), an application specific integrated circuit (ASIC) or other programmable logic devices, transistor logic devices, discrete hardware components, etc. The general purpose processor mentioned above may be a microprocessor or any conventional processor.

The above memory may be a volatile memory or a nonvolatile memory, or may include both volatile and nonvolatile memories. The non-volatile memory can be a read-only memory (ROM), a programmable ROM (PROM), an erasable PROM (EPROM), an electrically EPROM (EEPROM), or a flash memory. The volatile memory may be random access memory (RAM).

It should be understood that the above memory is exemplary but not restrictive. For example, the memory in the embodiments of the present application can also be static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM) and direct memory bus RAM (DR RAM), etc. That is, the memory in the embodiments of the present application is intended to include but is not limited to these and any other suitable types of memory.

FIG. 21 is a schematic block diagram of a communication system 2100, in accordance with an embodiment of the present application. The communication system 2100 includes a terminal device 2110 and a network device 2120. The terminal device 2110 is used to perform the above communication method; and the network device 2120 is used to perform the above communication method.

The terminal device 2110 can be used to implement the corresponding functions implemented by the terminal device in the above method, and the network device 2120 can be used to implement the corresponding functions implemented by the network device in the above method, wheieh will not be repeated here for the sake of brevity.

All or some of the above embodiments may be implemented by software, hardware, firmware or any combination thereof. When software is used to implemente the embodiments, the embodiments may implemented completely or partially in a form of a computer program product. The computer program product includes one or more computer instructions. When the computer program instructions are loaded and executed on a computer, the processes or functions according to the embodiments of the present application are generated in whole or in part. The computer may be a general purpose computer, a special purpose computer, a computer network, or other programmable device. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center via wired (e.g., a coaxial cable, an optical fiber, or a digital subscriber line (DSL)) or wireless (e.g., infrared, radio, or microwave, etc.) manner. The computer-readable storage medium may be any available medium that can be accessed by a computer or a data storage device such as a server or a data center that includes one or more available media integrated therein. The available medium may be a magnetic medium (e.g., a floppy disk, a hard disk, a magnetic tape), an optical medium (eg, a DVD), or a semiconductor medium (e.g., a solid state disk (SSD)).

It should be understood that in the various embodiments of the present application, the size of the serial numbers of the above processes does not mean the order of execution. The execution order of each process should be determined by its function and internal logic, and should not constitute any limitation on the implementation processes of the embodiments of the present application.

Those skilled in the art can clearly understand that, for the convenience and brevity of description, the specific working processes of the systems, devices and units described above can refer to the corresponding processes in the above method embodiments and will not be repeated here.

The above description is only a specific implementation method of the present application, but the protection scope of the present application is not limited thereto. Any technician familiar with the technical field can easily think of changes or substitutions within the technical scope disclosed in the present application, which should be covered by the protection scope of the present application. Therefore, the protection scope of the present application shall be based on the protection scope of the claims.

## Claims

1. A communication method, comprising:
determining, by a terminal device, based on first information, whether to perform physical random access channel (PRACH) repetitions, wherein the first information is obtained by processing by the terminal device.

2. The method according to claim 1, wherein the method further comprises:
performing, by the terminal device, in a case of determining to perform the PRACH repetitions, the PRACH repetitions on a plurality of target transmission resources, wherein a number of the plurality of target transmission resources is the same as a number of the PRACH repetitions, and each target transmission resource of the plurality of target transmission resources is used to perform one PRACH transmission.

3. The method according to claim 2, wherein determining, by the terminal device, based on the first information, whether to perform the PRACH repetitions, comprises:
determining, by the terminal device, in a case where the first information meets a first condition, to perform the PRACH repetitions.

4. The method according to claim 3, wherein the first information comprises a transmission result of a previous PRACH transmission; and
the method further comprises:
determining, by the terminal device, in a case where the transmission result of the previous PRACH transmission is transmission failure, that the first condition is met.

5. The method according to claim 4, wherein the method further comprises one of:
determining, by the terminal device, in a case of prforming the previous PRACH transmission and no receiving a random access response (RAR), that the transmission result of the previous PRACH transmission is transmission failure; and
determining, by the terminal device, in a case of prforming the previous PRACH transmission and no receiving a conflict resolution message, that the transmission result of the previous PRACH transmission is transmission failure.

6. The method according to any one of claims 3 to 5, wherein the first information comprises a measurement result of a first downlink signal; and
the method further comprises: determining, by the terminal device, in a case where the measurement result of the first downlink signal is less than a first threshold value, that the first condition is met.

7. The method according to claim 6, wherein the first threshold value is preset, or determined by the terminal device, or configured by a network device.

8. The method according to claim 7, wherein the first threshold value, in a case of being configured by the network device, is carried by one of: a feature combination preamble, a random access channel (RACH) common configuration parameter, a common configuration parameter of a message (msg) A, a beam failure recovery configuration, or a msg A configuration parameter in the RACH common configuration parameter.

9. The method according to claim 7, wherein the first threshold value, in a case of being determined by the terminal device, is determined based on a second threshold value; and the second threshold value is configured by the network device.

10. The method according to any one of claims 3 to 6, wherein the method further comprises:
receiving, by the terminal device, second information; the second information being used by the terminal device to determine whether to perform the PRACH repetitions.

11. The method according to claim 10, wherein determining, by the terminal device, in the case where the first information meets the first condition, to perform the PRACH repetitions, comprises:
determining, by the terminal device, to perform the PRACH repetitions in a case where the first information meets the first condition and the second information comprises first indication information and the first indication information is used to indicate initiation of the PRACH repetitions.

12. The method according to claim 11, wherein a value of the first indication information, in a case of being a first value, is used to indicate the initiation of the PRACH repetitions; or
a transmission type of PRACH comprised in the first indication information, in a case of being a repetition type, is used to indicate the initiation of the PRACH repetitions.

13. The method according to any one of claims 10 to 12, wherein determining, by the terminal device, in the case where the first information meets the first condition, to perform the PRACH repetitions, comprises:
determining, by the terminal device, in a case where the first information meets the first condition and the second information comprises a first threshold value, to perform the PRACH repetitions, wherein the first threshold value is a threshold value related to a measurement result of a downlink signal.

14. The method according to any one of claims 10 to 13, wherein determining, by the terminal device, in a case where the first information meets the first condition, to perform the PRACH repetitions, comprises:
determining, by the terminal device, in a case where the first information meets the first condition and a value of a first parameter indicated by the second information is a valid value, to perform the PRACH repetitions, wherein the value of the first parameter is used to determine the number of the PRACH repetitions.

15. The method according to any one of claims 2 to 13, wherein the number of the PRACH repetitions is related to a second parameter, wherein the second parameter is used to indicate a number of downlink signals associated with one transmission resource.

16. The method according to claim 15, wherein in a case where the second parameter is no less than 1, the number of the PRACH repetitions is equal to one of:
a first value, wherein the first value is equal to M multiplied by the second parameter, wherein M is a number of second downlink signals, and M is a positive integer;
a second value, wherein the second value is equal to M multiplied by a first preset value.

17. The method according to claim 15, wherein in a case where the second parameter is less than 1, the number of the PRACH repetitions is equal to one of:
a third value, wherein the third value is a sum of a number of one or more first available transmission resources respectively associated with M second downlink signals in one mapping cycle, wherein M is a positive integer;
a fourth value, wherein the fourth value is equal to M multiplied by a second preset value.

18. The method according to claim 17, wherein the number of the PRACH repetitions is equal to a minimum value of the third value and the fourth value.

19. The method according to any one of claims 2 to 13, wherein the method further comprises:
receiving, by the terminal device, third information, wherein the third information carries a fifth value, and the fifth value is used to determine the number of the PRACH repetitions.

20. The method according to claim 14, wherein the value of the first parameter comprises a fifth value, and the fifth value is used to determine the number of the PRACH repetitions.

21. The method according to claim 19 or 20, wherein the number of the PRACH repetitions is equal to the fifth value.

22. The method according to claim 19 or 20, wherein the number of the PRACH repetitions is equal to a product of the fifth value and a sixth value.

23. The method according to claim 22, wherein the sixth value is configured by a network device or preset.

24. The method according to claim 22, wherein the sixth value is related to a second parameter, and the second parameter is used to indicate a number of downlink signals associated with one transmission resource; and
the sixth value is equal to one of: a first preset value in a case where the second parameter is no less than 1; or the second parameter in a case where the second parameter is no less than 1.

25. The method according to claim 22, wherein the sixth value is related to a second parameter, and the second parameter is used to indicate a number of downlink signals associated with one transmission resource; and the sixth value is equal to one of:
M multiplied by a second preset value in a case where the second parameter is less than 1, wherein M is a number of second downlink signals, and M is a positive integer;
M multiplied by a reciprocal of the second parameter in a case where the second parameter is less than 1; or
M in a case where the second parameter is less than 1.

26. The method according to claim 22, wherein the sixth value is related to a second parameter, and the second parameter is used to indicate a number of downlink signals associated with one transmission resource; and the fifth value is a number of mapping cycles occupied by the PRACH repetitions.

27. The method according to claim 26, wherein in a case where the second parameter is less than 1, the sixth value is equal to a sum of a number of one or more first available transmission resources respectively associated with M second downlink signals in one mapping cycle.

28. The method according to claim 26, wherein in a case where the second parameter is no less than 1, the sixth value is equal to a number of one or more second available transmission resources in one mapping cycle, wherein each second available transmission resource of the one or more second available transmission resources is associated with one or more second downlink signals of M second downlink signals.

29. The method according to any one of claims 16 to 18 and 21 to 25, wherein the plurality of target transmission resources comprise a plurality of transmission resources that are continuous in one or more mapping cycles.

30. The method according to any one of claims 17, 18, 21 to 23 and 25, wherein the plurality of target transmission resources comprise: one or more first available transmission resources associated with each second downlink signal of M second downlink signals in each mapping cycle of one or more mapping cycles.

31. The method according to any one of claims 16, 21, 22 and 24, wherein the plurality of target transmission resources comprise one or more second available transmission resources in each mapping cycle of one or more mapping cycles, wherein each second available transmission resource of the one or more second available transmission resources is associated with one or more second downlink signals of M second downlink signals.

32. The method according to claim 27, wherein the plurality of target transmission resources comprise one or more first available transmission resources associated with each second downlink signal of M second downlink signals in each mapping cycle of the fifth value of mapping cycles.

33. The method according to claim 28, wherein the plurality of target transmission resources comprise one or more second available transmission resources in each mapping cycle of the fifth value of mapping cycles.

34. The method according to any one of claims 29, 30 and 32, wherein a starting target transmission resource of the plurality of target transmission resources is a first first available transmission resource associated with a first second downlink signal of the M second downlink signals in a first mapping cycle, wherein
the first first available transmission resource associated with the first second downlink signal of the M second downlink signals in the first mapping cycle is one of:
a first available transmission resource associated with the first second downlink signal of the M second downlink signals in the first mapping cycle;
a first available transmission resource in a subset of transmission resources associated with the first second downlink signal of the M second downlink signals in the first mapping cycle; or
a designated transmission resource associated with the first second downlink signal of the M second downlink signals in the first mapping cycle.

35. The method according to any one of claims 29, 31 and 33, wherein a starting target transmission resource of the plurality of target transmission resources is a first second available transmission resource in a first mapping cycle.

36. The method according to any one of claims 17, 27, 30 and 32, wherein in a case where the second parameter is less than 1, one or more first available transmission resources associated with each second downlink signal of the M second downlink signals in one mapping cycle comprise one of:
one or more available transmission resources associated with each second downlink signal of the M second downlink signals in the one mapping cycle;
designated transmission resources associated with each second downlink signal of the M second downlink signals in the one mapping cycle;
available transmission resources in a subset of transmission resources associated with each second downlink signal of the M second downlink signals in the one mapping cycle;
available transmission resources between a starting available transmission resource and an ending available transmission resource associated with each second downlink signal of the M second downlink signals in the one mapping cycle, wherein the starting available transmission resource and/or the ending available transmission resource associated with each second downlink signal are a designated transmission resource associated with each second downlink signal.

37. The method according to claim 34 or 36, wherein the method further comprises:
receiving, by the terminal device, fourth information, wherein in a case where the second parameter is less than 1, the fourth information is used to determine one or more available transmission resources associated with each second downlink signal of the M second downlink signals in one mapping cycle.

38. The method according to claim 37, wherein the fourth information comprises a bit map; and the bit map is used to indicate one or more available transmission resources associated with each second downlink signal of the M second downlink signals in one mapping cycle.

39. The method according to claim 37, wherein a value of the fourth information, in a case of being in a first value range, is used to determine a subset of transmission resources associated with each second downlink signal of the M second downlink signals in the one mapping cycle; and/or
the value of the fourth information, in a case of being in a second value range, is used to determine designated transmission resources associated with each second downlink signal of the M second downlink signals in the one mapping cycle.

40. The method according to any one of claims 28, 31 and 33, wherein the one or more second available transmission resources in the one mapping cycle comprise one available transmission resource associated with each second downlink signal of the M second downlink signals in the one mapping cycle, wherein the one available transmission resource associated with each second downlink signal is determined based on the second parameter in a case where the second parameter is no less than 1.

41. The method according to any one of claims 17 and 26 to 38, wherein the mapping cycle comprises transmission resources to which a plurality of downlink signals are mapped; and the plurality of downlink signals comprise the M second downlink signals.

42. The method according to any one of claims 17, 27, 28, 30 to 32, 34, 36 to 38, 40 and 41, wherein the M second downlink signals are downlink signals used by the terminal device.

43. The method according to claim 42, wherein the M second downlink signals are indicated by fifth information.

44. The method according to claim 42, wherein the method further comprises:
selecting, by the terminal device, based on measurement results respectively corresponding to a plurality of downlink signals, the M second downlink signals from the plurality of downlink signals, wherein M is configured by a network device or preset.

45. The method according to claim 44, wherein selecting the M second downlink signals from the plurality of downlink signals comprises one of:
selecting M second downlink signals with largest measurement results from the plurality of downlink signals;
in a case where a measurement result of a downlink signal among the plurality of downlink signals is greater than a first threshold value, determining the M second downlink signals based on the downlink signal whose measurement result is greater than the first threshold value.

46. The method according to any one of claims 6, 13, 15 to 18, 23, 25 to 28, 30 to 34 and 36 to 45, wherein the downlink signal comprises a synchronization signal block (SSB), or a channel state information reference signal (CSI-RS).

47. The method according to any one of claims 2 to 46, wherein a transmission resource is a PRACH occasion.

48. The method according to any one of claims 2 to 47, wherein in a case where the PRACH repetitions are performed, PRACH carries a first-type preamble; the first-type preamble is a preamble used for the PRACH repetitions; and the first-type preamble is preset or configured by a network device.

49. A communication method, comprising:
receiving, by a network device, physical random access channels (PRACHs), wherein whether to perform PRACH repetitions is determined by a terminal device based on first information, and the first information is obtained by processing by the terminal device.

50. The method according to claim 49, wherein receiving, by the network device, the PRACHs, comprises:
receiving, by the network device, on a plurality of target transmission resources, repetitive PRACHs, wherein a number of the plurality of target transmission resources is the same as a number of PRACH repetitions, and each target transmission resource of the plurality of target transmission resources is used to receive one PRACH.

51. The method according to claim 50, wherein receiving, by the network device, on the plurality of target transmission resources, the repetitive PRACHs, comprises:
receiving, by the network device, a PRACH sent by the terminal device, and parsing a preamble carried by the PRACH;
determining, by the network device, in a case where the preamble carried by the PRACH is a first-type preamble, that the terminal device performs the PRACH repetitions; and receiving, by the network device, on the plurality of target transmission resources, the repetitive PRACHs by the terminal device, wherein the first-type preamble is a preamble used by the terminal device when performing the PRACH repetitions; and the first-type preamble is preset, or is configured by the network device for the terminal device.

52. The method according to claim 51, wherein the method further comprises:
configuring, by the network device, a first threshold value for the terminal device through one of: a feature combination preamble, a random access channel (RACH) common configuration parameter, a common configuration parameter of a message (msg) A, a beam failure recovery configuration, a msg A specific configuration parameter in the RACH common configuration parameter, wherein the first threshold value is a threshold value related to a measurement result of a downlink signal.

53. The method according to claim 51, wherein the method further comprises:
configuring, by the network device, a second threshold value for the terminal device, wherein the second threshold value is used by the terminal device to determine a first threshold value.

54. The method according to claim 51, wherein the method further comprises:
sending, by the network device, second information to the terminal device, wherein the second information is used by the terminal device to determine whether to perform the PRACH repetitions.

55. The method according to claim 54, wherein the second information comprises first indication information, wherein
a value of the first indication information, in a case of being a first value, is used to indicate initiation of the PRACH repetitions; or a transmission type of PRACH comprised in the first indication information, in a case of being a repetition type, is used to indicate the initiation of the PRACH repetitions.

56. The method according to claim 54 or 55, wherein the second information comprises a first threshold value; and the first threshold value is a threshold value related to a measurement result of a downlink signal.

57. The method according to any one of claims 54 to 56, wherein the second information is used to indicate a value of a first parameter, and the value of the first parameter is used by the terminal device to determine the number of the PRACH repetitions.

58. The method according to any one of claims 51 to 56, wherein the number of the PRACH repetitions is related to a second parameter, wherein the second parameter is used to indicate a number of downlink signals associated with one transmission resource.

59. The method according to claim 58, wherein in a case where the second parameter is no less than 1, the number of the PRACH repetitions is equal to one of: a first value, wherein the first value is equal to M multiplied by the second parameter, M is a number of second downlink signals, and M is a positive integer; or a second value, wherein the second value is equal to M multiplied by a first preset value.

60. The method according to claim 58, wherein in a case where the second parameter is less than 1, the number of the PRACH repetitions is equal to one of: a third value, wherein the third value is a sum of a number of one or more first available transmission resources respectively associated with M second downlink signals in one mapping cycle, and M is a positive integer; or a fourth value, wherein the fourth value is equal to M multiplied by a second preset value.

61. The method according to claim 60, wherein the number of the PRACH repetitions is equal to a minimum value of the third value and the fourth value.

62. The method according to any one of claims 51 to 56, wherein the method further comprises:
sending, by the network device, third information to the terminal device, wherein the third information carries a fifth value, and the fifth value is used to determine the number of the PRACH repetitions.

63. The method according to claim 57, wherein the value of the first parameter comprises a fifth value, and the fifth value is used to determine the number of the PRACH repetitions.

64. The method according to claim 62 or 63, wherein the number of the PRACH repetitions is equal to the fifth value.

65. The method according to claim 62 or 63, wherein the number of the PRACH repetitions is equal to a product of the fifth value and a sixth value.

66. The method according to claim 65, wherein the sixth value is configured by the network device for the terminal device, or preset.

67. The method according to claim 65, wherein the sixth value is related to a second parameter, wherein the second parameter is used to indicate a number of downlink signals associated with one transmission resource; and the sixth value is equal to one of: a first preset value in a case where the second parameter is no less than 1; the second parameter in a case where the second parameter is no less than 1.

68. The method according to claim 65, wherein the sixth value is related to a second parameter, wherein the second parameter is used to indicate a number of downlink signals associated with one transmission resource; and the sixth value is equal to one of: M multiplied by a second preset value in a case where the second parameter is less than 1, wherein M is a number of second downlink signals, and M is a positive integer; M multiplied by a reciprocal of the second parameter in a case where the second parameter is less than 1; M in a case where the second parameter is less than 1.

69. The method according to claim 65, wherein the sixth value is related to a second parameter, wherein the second parameter is used to represent a number of downlink signals associated with one transmission resource; and the fifth value is a number of mapping cycles occupied by the PRACH repetitions.

70. The method according to claim 69, wherein in a case where the second parameter is less than 1, the sixth value is equal to a sum of a number of one or more first available transmission resources respectively associated with M second downlink signals in one mapping cycle.

71. The method according to claim 69, wherein in a case where the second parameter is no less than 1, the sixth value is equal to a number of one or more second available transmission resources in one mapping cycle; and each second available transmission resource of the one or more second available transmission resources is associated with one or more second downlink signals of M second downlink signals.

72. The method according to any one of claims 59 to 61 and 64 to 68, wherein the plurality of target transmission resources comprise a plurality of transmission resources that are continuous in one or more mapping cycles.

73. The method according to any one of claims 60, 61, 64 to 66 and 68, wherein the plurality of target transmission resources comprise one or more first available transmission resources associated with each second downlink signal of M second downlink signals in each mapping cycle of one or more mapping cycles.

74. The method according to any one of claims 59, 64, 65 and 67, wherein the plurality of target transmission resources comprise one or more second available transmission resources in each mapping cycle of one or more mapping cycles; and each second available transmission resource of the one or more second available transmission resources is associated with one or more second downlink signals of M second downlink signals.

75. The method according to claim 70, wherein the plurality of target transmission resources comprise one or more first available transmission resources associated with each second downlink signal of M second downlink signals in each mapping cycle of the fifth value of mapping cycles.

76. The method according to claim 71, wherein the plurality of target transmission resources comprise one or more second available transmission resources in each mapping cycle of the fifth value of mapping cycles.

77. The method according to any one of claims 72, 73 and 75, wherein a starting target transmission resource of the plurality of target transmission resources is a first first available transmission resource associated with a first second downlink signal of the M second downlink signals in a first mapping cycle, wherein the first first available transmission resource associated with the first second downlink signal of the M second downlink signals in the first mapping cycle is one of: a first available transmission resource associated with the first second downlink signal of the M second downlink signals in the first mapping cycle; a first available transmission resource in a subset of transmission resources associated with the first second downlink signal of the M second downlink signals in the first mapping cycle; a designated transmission resource associated with the first second downlink signal of the M second downlink signals in the first mapping cycle.

78. The method according to any one of claims 72, 74 and 76, wherein a starting target transmission resource of the plurality of target transmission resources is a first second available transmission resource in a first mapping cycle.

79. The method according to any one of claims 60, 70, 73, 75 and 77, wherein the method further comprises:
sending, by the network device, fourth information to the terminal device, wherein the fourth information, in a case where the second parameter is less than 1, is used by the terminal device to determine one or more available transmission resources associated with each second downlink signal of the M second downlink signals in one mapping cycle.

80. The method according to claim 79, wherein the fourth information comprises a bit map; and the bit map is used to indicate one or more available transmission resources associated with each second downlink signal of the M second downlink signals in one mapping cycle.

81. The method according to claim 79, wherein a value of the fourth information, in a case where being within a first value range, is used by the terminal device to determine a subset of transmission resources associated with each second downlink signal of the M second downlink signals in the one mapping cycle; and/or
the value of the fourth information, in a case of being within a second value range, is used by the terminal device to determine designated transmission resources associated with each second downlink signal of the M second downlink signals in the one mapping cycle.

82. The method according to any one of claims 60 and 69 to 81, wherein the mapping cycle comprises transmission resources to which a plurality of downlink signals are mapped; and the plurality of downlink signals comprise the M second downlink signals.

83. The method according to any one of claims 60, 70, 71, 73 to 77 and 79 to 82, wherein the method further comprises:
sending, by the network device, fifth information to the terminal device, wherein the fifth information is used to indicate the M second downlink signals.

84. The method according to any one of claims 52, 56 to 60, 66, 68, 70, 71, 73 to 77 and 79 to 82, wherein the downlink signal comprises a synchronization signal block (SSB), or a channel state information reference signal (CSI-RS).

85. The method according to any one of claims 50 to 84, wherein a transmission resource is a PRACH occasion.

86. A terminal device, comprising:
a first processing unit used to determine whether to perform physical random access channel (PRACH) repetitions based on first information, wherein the first information is obtained by processing by the terminal device.

87. The terminal device according to claim 86, wherein the first processing unit, in a case of determining to perform the PRACH repetitions, is used to perform the PRACH repetitions on a plurality of target transmission resources, wherein a number of the plurality of target transmission resources is the same as a number of the PRACH repetitions, and each target transmission resource of the plurality of target transmission resources is used to perform one PRACH transmission.

88. The terminal device according to claim 87, wherein in a case where the first information meets a first condition, the first processing unit is used to determine to perform the PRACH repetitions.

89. The terminal device according to claim 88, wherein the first information comprises a transmission result of a previous PRACH transmission; and in a case where the transmission result of the previous PRACH transmission is transmission failure, the first processing unit is used to determine that the first condition is met.

90. The terminal device according to claim 89, wherein the first processing unit is used to perform one of:
determining, in a case where the previous PRACH transmission is performed and no random access response (RAR) is received, that the transmission result of the previous PRACH transmission is transmission failure;
determining, in a case where the previous PRACH transmission is performed and no conflict resolution message is received, that the transmission result of the previous PRACH transmission is transmission failure.

91. The terminal device according to any one of claims 88 to 90, wherein the first information comprises a measurement result of a first downlink signal; and in a case where the measurement result of the first downlink signal is less than a first threshold value, the first processing unit is used to determine that the first condition is met.

92. The terminal device according to claim 91, wherein the first threshold value is preset, or determined by the terminal device, or configured by a network device.

93. The terminal device according to claim 92, wherein the first threshold value, in a case of being configured by the network device, is carried by one of: a feature combination preamble, a random access channel (RACH) common configuration parameter, a common configuration parameter of a message (msg) A, a beam failure recovery configuration, or a msg A configuration parameter in the RACH common configuration parameter.

94. The terminal device according to claim 92, wherein the first threshold value, in a case of being determined by the terminal device, is determined based on a second threshold value; and the second threshold value is configured by the network device.

95. The terminal device according to any one of claims 88 to 91, wherein the terminal device further comprises:
a first communication unit used to receive second information; the second information being used by the terminal device to determine whether to perform the PRACH repetitions.

96. The terminal device according to claim 95, wherein the first processing unit is used to determine to perform PRACH repetitions in a case where the first information meets the first condition and the second information comprises first indication information and the first indication information is used to indicate initiation of the PRACH repetitions.

97. The terminal device according to claim 96, wherein a value of the first indication information, in a case of being a first value, is used to indicate the initiation of the PRACH repetitions; or a transmission type of PRACH comprised in the first indication information, in a case of being a repetition type, is used to indicate the initiation of the PRACH repetitions.

98. The terminal device according to any one of claims 95 to 97, wherein in a case where the second information comprises a first threshold value and the first information meets the first condition, the first processing unit is used to determine to perform the PRACH repetitions, wherein the first threshold value is a threshold value related to a measurement result of a downlink signal.

99. The terminal device according to any one of claims 95 to 98, wherein in a case where the first information meets the first condition and a value of a first parameter indicated by the second information is a valid value, the first processing unit is used to determine to perform the PRACH repetitions, wherein the value of the first parameter is used to determine the number of the PRACH repetitions.

100. The terminal device according to any one of claims 87 to 98, wherein the number of the PRACH repetitions is related to a second parameter, wherein the second parameter is used to indicate a number of downlink signals associated with one transmission resource.

101. The terminal device according to claim 100, wherein, in a case where the second parameter is no less than 1, the number of the PRACH repetitions is equal to one of: a first value, wherein the first value is equal to M multiplied by the second parameter, wherein M is a number of second downlink signals, and M is a positive integer; or a second value, wherein the second value is equal to M multiplied by a first preset value.

102. The terminal device according to claim 100, wherein in a case where the second parameter is less than 1, the number of the PRACH repetitions is equal to one of: a third value, wherein the third value is a sum of a number of one or more first available transmission resources respectively associated with M second downlink signals in one mapping cycle, wherein M is a positive integer; or a fourth value, wherein the fourth value is equal to M multiplied by a second preset value.

103. The terminal device according to claim 102, wherein the number of the PRACH repetitions is equal to a minimum value of the third value and the fourth value.

104. The terminal device according to any one of claims 87 to 98, wherein the terminal device further comprises: a first communication unit used to receive third information, wherein the third information carries a fifth value, and the fifth value is used to determine the number of the PRACH repetitions.

105. The terminal device according to claim 99, wherein the value of the first parameter comprises a fifth value, and the fifth value is used to determine the number of the PRACH repetitions.

106. The terminal device according to claim 104 or 105, wherein the number of the PRACH repetitions is equal to the fifth value.

107. The terminal device according to claim 104 or 105, wherein the number of the PRACH repetitions is equal to a product of the fifth value and a sixth value.

108. The terminal device according to claim 107, wherein the sixth value is configured by a network device or preset.

109. The terminal device according to claim 107, wherein the sixth value is related to a second parameter, wherein the second parameter is used to indicate a number of downlink signals associated with one transmission resource; and
the sixth value is equal to one of: a first preset value in a case where the second parameter is no less than 1; or the second parameter in a case where the second parameter is no less than 1.

110. The terminal device according to claim 107, wherein the sixth value is related to a second parameter, wherein the second parameter is used to indicate a number of downlink signals associated with one transmission resource; and the sixth value is equal to one of: M multiplied by a second preset value in a case where the second parameter is less than 1, wherein M is a number of second downlink signals, and M is a positive integer; M multiplied by a reciprocal of the second parameter in a case where the second parameter is less than 1; or M in a case where the second parameter is less than 1.

111. The terminal device according to claim 107, wherein the sixth value is related to a second parameter, wherein the second parameter is used to represent a number of downlink signals associated with one transmission resource; and the fifth value is a number of mapping cycles occupied by the PRACH repetitions.

112. The terminal device according to claim 111, in a case where the second parameter is less than 1, the sixth value is equal to a sum of a number of one or more first available transmission resources respectively associated with M second downlink signals in one mapping cycle.

113. The terminal device according to claim 111, wherein in a case where the second parameter is no less than 1, the sixth value is equal to a number of one or more second available transmission resources in one mapping cycle; and each second available transmission resource of the one or more second available transmission resources is associated with one or more second downlink signals of M second downlink signals.

114. The terminal device according to any one of claims 101 to 103 and 106 to 110, wherein the plurality of target transmission resources comprise: a plurality of transmission resources that are continuous in one or more mapping cycles.

115. The terminal device according to any one of claims 102, 103, 106 to 108 and 110, wherein the plurality of target transmission resources comprise one or more first available transmission resources associated with each second downlink signal of M second downlink signals in each mapping cycle of one or more mapping cycles.

116. The terminal device according to any one of claims 101, 106, 107 and 109, wherein the plurality of target transmission resources comprise one or more second available transmission resources in each mapping cycle of one or more mapping cycles; and each second available transmission resource of the one or more second available transmission resources is associated with one or more second downlink signals of M second downlink signals.

117. The terminal device according to claim 112, wherein the plurality of target transmission resources comprise one or more first available transmission resources associated with each second downlink signal of M second downlink signals in each mapping cycle of the fifth value of mapping cycles.

118. The terminal device according to claim 113, wherein the plurality of target transmission resources comprise one or more second available transmission resources in each mapping cycle of the fifth value of mapping cycles.

119. The terminal device according to any one of claims 114, 115 and 117, wherein a starting target transmission resource of the plurality of target transmission resources is a first first available transmission resource associated with a first second downlink signal of the M second downlink signals in a first mapping cycle, wherein the first first available transmission resource associated with the first second downlink signal of the M second downlink signals in the first mapping cycle is one of: a first available transmission resource associated with the first second downlink signal of the M second downlink signals in the first mapping cycle; a first available transmission resource in a subset of transmission resources associated with the first second downlink signal of the M second downlink signals in the first mapping cycle; or a designated transmission resource associated with the first second downlink signal of the M second downlink signals in the first mapping cycle.

120. The terminal device according to any one of claims 114, 116 and 118, wherein a starting target transmission resource of the plurality of target transmission resources is a first second available transmission resource in a first mapping cycle.

121. The terminal device according to any one of claims 102, 112, 115 and 117, wherein in a case where the second parameter is less than 1, one or more first available transmission resources associated with each second downlink signal of the M second downlink signals in one mapping cycle comprise one of: one or more available transmission resources associated with each second downlink signal of the M second downlink signals in the one mapping cycle; designated transmission resources associated with each second downlink signal of the M second downlink signals in the one mapping cycle; available transmission resources in a subset of transmission resources associated with each second downlink signal of the M second downlink signals in the one mapping cycle; available transmission resources between a starting available transmission resource and an ending available transmission resource associated with each second downlink signal of the M second downlink signals in the one mapping cycle, wherein the starting available transmission resource and/or the ending available transmission resource associated with each second downlink signal are a designated transmission resource associated with each second downlink signal.

122. The terminal device according to claim 119 or 121, wherein the terminal device further comprises:
a first communication unit to receive fourth information, wherein in a case where the second parameter is less than 1, the fourth information is used to determine one or more available transmission resources associated with each second downlink signal of the M second downlink signals in one mapping cycle.

123. The terminal device according to claim 122, wherein the fourth information comprises a bit map; and the bit map is used to indicate one or more available transmission resources associated with each second downlink signal of the M second downlink signals in one mapping cycle.

124. The terminal device according to claim 122, wherein a value of the fourth information, in a case of being in a first value range, is used to determine a subset of transmission resources associated with each second downlink signal of the M second downlink signals in the one mapping cycle; and/or
the value of the fourth information, in a case of being in a second value range, is used to determine designated transmission resources associated with each second downlink signal of the M second downlink signals in the one mapping cycle.

125. The terminal device according to any one of claims 113, 116 and 118, wherein the one or more second available transmission resources in the one mapping cycle comprise one available transmission resource associated with each second downlink signal of the M second downlink signals in the one mapping cycle, wherein the one available transmission resource associated with each second downlink signal is determined based on the second parameter in a case where the second parameter is no less than 1.

126. The terminal device according to any one of claims 102 and 111 to 125, wherein the mapping cycle comprises transmission resources to which a plurality of downlink signals are mapped; and the plurality of downlink signals comprise the M second downlink signals.

127. The terminal device according to any one of claims 102, 112, 113, 115 to 117, 119 and 121 to 126, wherein the M second downlink signals are downlink signals used by the terminal device.

128. The terminal device according to claim 127, wherein the M second downlink signals are indicated by fifth information.

129. The terminal device according to claim 127, wherein the first processing unit is used to select the M second downlink signals from the plurality of downlink signals based on measurement results respectively corresponding to a plurality of downlink signals, wherein M is configured by the network device or preset.

130. The terminal device according to claim 129, wherein the first processing unit is used to perform one of:
selecting M second downlink signals with largest measurement results from the plurality of downlink signals;
in a case where a measurement result of a downlink signal among the plurality of downlink signals is greater than a first threshold value, determining the M second downlink signals based on the downlink signal whose measurement result is greater than the first threshold value.

131. The terminal device according to any one of claims 91, 98, 100 to 102, 109 to 113, 115 to 117, 119 and 121 to 130, wherein the downlink signal comprises a synchronization signal block (SSB), or a channel state information reference signal (CSI-RS).

132. The terminal device according to any one of claims 87 to 131, wherein a transmission resource is a PRACH occasion.

133. The terminal device according to any one of claims 87 to 132, in a case where the PRACH repetitions are performed, PRACH is used to carry a first-type preamble; the first-type preamble is a preamble used for the PRACH repetitions; and the first-type preamble is preset or configured by a network device.

134. A network device, comprising:
a second communication unit used to receive physical random access channels (PRACHs), wherein whether to perform PRACH repetitions is determined by a terminal device based on first information, and the first information is obtained by processing by the terminal device.

135. The network device according to claim 134, wherein the second communication unit is used to receive repetitive PRACHs on a plurality of target transmission resources, wherein a number of the plurality of target transmission resources is the same as a number of PRACH repetitions, and each target transmission resource of the plurality of target transmission resources is used to receive one PRACH.

136. The network device according to claim 135, wherein the network device further comprises:
a second processing unit used to receive a PRACH sent by the terminal device, and parse a preamble carried by the PRACH;
in a case where the preamble carried by the PRACH is a first-type preamble, the network device determines that the terminal device performs the PRACH repetitions, and the second communication unit receives the repetitive PRACHs by the terminal device on the plurality of target transmission resources, wherein the first-type preamble is a preamble used by the terminal device when performing the PRACH repetitions; and the first-type preamble is preset, or is configured by the network device for the terminal device.

137. The network device according to claim 136, wherein the second communication unit is used to configure a first threshold value for the terminal device through one of: a feature combination preamble, a random access channel (RACH) common configuration parameter, a common configuration parameter of a message (msg) A, a beam failure recovery configuration, a msg A specific configuration parameter in the RACH common configuration parameter, wherein the first threshold value is a threshold value related to a measurement result of a downlink signal.

138. The network device according to claim 136, wherein the second communication unit is used to configure a second threshold value for the terminal device, and the second threshold value is used by the terminal device to determine a first threshold value.

139. The network device according to claim 136, wherein the second communication unit is used to send second information to the terminal device; and the second information is used by the terminal device to determine whether to perform the PRACH repetitions.

140. The network device according to claim 139, wherein the second information comprises first indication information, wherein
a value of the first indication information, in a case of being a first value, is used to indicate initiation of the PRACH repetitions; or a transmission type of PRACH comprised in the first indication information, in a case of being a repetition type, is used to indicate the initiation of the PRACH repetitions.

141. The network device according to claim 139 or 140, wherein the second information comprises a first threshold value; and the first threshold value is a threshold value related to a measurement result of a downlink signal.

142. The network device according to any one of claims 139 to 141, wherein the second information is used to indicate a value of a first parameter, and the value of the first parameter is used by the terminal device to determine the number of the PRACH repetitions.

143. The network device according to any one of claims 136 to 141, wherein the number of the PRACH repetitions is related to a second parameter, wherein the second parameter is used to indicate a number of downlink signals associated with one transmission resource.

144. The network device according to claim 143, wherein in a case where the second parameter is no less than 1, the number of the PRACH repetitions is equal to one of: a first value, wherein the first value is equal to M multiplied by the second parameter, M is a number of second downlink signals, and M is a positive integer; or a second value, wherein the second value is equal to M multiplied by a first preset value.

145. The network device according to claim 143, wherein in a case where the second parameter is less than 1, the number of the PRACH repetitions is equal to one of: a third value, wherein the third value is a sum of a number of one or more first available transmission resources respectively associated with M second downlink signals in one mapping cycle, and M is a positive integer; or a fourth value, wherein the fourth value is equal to M multiplied by a second preset value.

146. The network device according to claim 145, wherein the number of the PRACH repetitions is equal to a minimum value of the third value and the fourth value.

147. The network device according to any one of claims 136 to 141, wherein the second communication unit is used to send third information to the terminal device, the third information carries a fifth value, and the fifth value is used to determine the number of the PRACH repetitions.

148. The network device according to claim 142, wherein the value of the first parameter comprises a fifth value, and the fifth value is used to determine the number of the PRACH repetitions.

149. The network device according to claim 147 or 148, wherein the number of the PRACH repetitions is equal to the fifth value.

150. The network device according to claim 147 or 148, wherein the number of the PRACH repetitions is equal to a product of the fifth value and a sixth value.

151. The network device according to claim 150, wherein the sixth value is configured by the network device for the terminal device or preset.

152. The network device according to claim 150, wherein the sixth value is related to a second parameter, wherein the second parameter is used to indicate a number of downlink signals associated with one transmission resource; and the sixth value is equal to one of: a first preset value in a case where the second parameter is no less than 1; the second parameter in a case where the second parameter is no less than 1.

153. The network device according to claim 150, wherein the sixth value is related to a second parameter, wherein the second parameter is used to indicate a number of downlink signals associated with one transmission resource; and the sixth value is equal to one of: M multiplied by a second preset value in a case where the second parameter is less than 1, wherein M is a number of second downlink signals, and M is a positive integer; M multiplied by a reciprocal of the second parameter in a case where the second parameter is less than 1; M in a case where the second parameter is less than 1.

154. The network device according to claim 150, wherein the sixth value is related to a second parameter, wherein the second parameter is used to represent a number of downlink signals associated with one transmission resource; and the fifth value is a number of mapping cycles occupied by the PRACH repetitions.

155. The network device according to claim 154, wherein in a case where the second parameter is less than 1, the sixth value is equal to a sum of a number of one or more first available transmission resources respectively associated with M second downlink signals in one mapping cycle.

156. The network device according to claim 154, wherein in a case where the second parameter is no less than 1, the sixth value is equal to a number of one or more second available transmission resources in one mapping cycle; and each second available transmission resource of the one or more second available transmission resources is associated with one or more second downlink signals of M second downlink signals.

157. The network device according to any one of claims 144 to 146 and 149 to 153, wherein the plurality of target transmission resources comprise a plurality of transmission resources that are continuous in one or more mapping cycles.

158. The network device according to any one of claims 145, 146, 149 to 151 and 153, wherein the plurality of target transmission resources comprise one or more first available transmission resources associated with each second downlink signal of M second downlink signals in each mapping cycle of one or more mapping cycles.

159. The network device according to any one of claims 144, 149, 150 and 152, wherein the plurality of target transmission resources comprise one or more second available transmission resources in each mapping cycle of one or more mapping cycles; and each second available transmission resource of the one or more second available transmission resources is associated with one or more second downlink signals of M second downlink signals.

160. The network device according to claim 155, wherein the plurality of target transmission resources comprise one or more first available transmission resources associated with each second downlink signal of M second downlink signals in each mapping cycle of the fifth value of mapping cycles.

161. The network device according to claim 156, wherein the plurality of target transmission resources comprise one or more second available transmission resources in each mapping cycle of the fifth value of mapping cycles.

162. The network device according to any one of claims 157, 158 and 160, wherein a starting target transmission resource of the plurality of target transmission resources is a first first available transmission resource associated with a first second downlink signal of the M second downlink signals in a first mapping cycle, wherein the first first available transmission resource associated with the first second downlink signal of the M second downlink signals in the first mapping cycle is one of: a first available transmission resource associated with the first second downlink signal of the M second downlink signals in the first mapping cycle; a first available transmission resource in a subset of transmission resources associated with the first second downlink signal of the M second downlink signals in the first mapping cycle; a designated transmission resource associated with the first second downlink signal of the M second downlink signals in the first mapping cycle.

163. The network device according to any one of claims 157, 159 and 161, wherein a starting target transmission resource of the plurality of target transmission resources is a first second available transmission resource in a first mapping cycle.

164. The network device according to any one of claims 145, 155, 157, 159 and 161, wherein the second communication unit is used to send fourth information to the terminal device; and the fourth information, in a case where the second parameter is less than 1, is used by the terminal device to determine one or more available transmission resources associated with each second downlink signal of the M second downlink signals in one mapping cycle.

165. The network device according to claim 164, wherein the fourth information comprises a bit map; and the bit map is used to indicate one or more available transmission resources associated with each second downlink signal of the M second downlink signals in one mapping cycle.

166. The network device according to claim 164, wherein a value of the fourth information, in a case where being within a first value range, is used by the terminal device to determine a subset of transmission resources associated with each second downlink signal of the M second downlink signals in the one mapping cycle; and/or
the value of the fourth information, in a case of being within a second value range, is used by the terminal device to determine designated transmission resources associated with each second downlink signal of the M second downlink signals in the one mapping cycle.

167. The network device according to any one of claims 145 and 154 to 166, wherein the mapping cycle comprises transmission resources to which a plurality of downlink signals are mapped; and the plurality of downlink signals comprise the M second downlink signals.

168. The network device according to any one of claims 145, 155, 156, 158 to 162 and 164 to 167, wherein the second communication unit is used to send fifth information to the terminal device, and the fifth information is used to indicate the M second downlink signals.

169. The network device according to any one of claims 137, 141, 143 to 145, 152 to 156 and 158 to 168, wherein the downlink signal comprises a synchronization signal block (SSB), or a channel state information reference signal (CSI-RS).

170. The network device according to any one of claims 135 to 169, wherein a transmission resource is a PRACH occasion.

171. A terminal device, comprising: a processor and a memory, wherein the memory is configured to store a computer program, and the processor is configured to call and run the computer program stored in the memory to cause a terminal device to perform the method according to any one of claims 1 to 48.

172. A network device, comprising: a processor and a memory, wherein the memory is configured to store a computer program, and the processor is configured to call and run the computer program stored in the memory to cause a network device to perform the method according to any one of claims 49 to 85.

173. A chip, comprising: a processor, configured to call and run a computer program from a memory to cause a device on which the chip is mounted to perform the method according to any one of claims 1 to 48 or 49 to 85.

174. A computer-readable storage medium, configured to store a computer program, wherein the computer program, when executed by a device, causes the device to perform the method according to any one of claims 1 to 48 or 49 to 85.

175. A computer program product, comprising computer program instructions, wherein the computer program instructions cause a computer to perform the method according to any one of claims 1 to 48 or 49 to 85.
